# EUROPÄISCHE PATENTSCHRIFT

(11) **EP 3 390 794 B1**
(45) Veröffentlichungstag und Bekanntmachung des Hinweises auf die Patenterteilung: **26.06.2019**
(21) Anmeldenummer: 16750829.0
(22) Anmeldetag: 10.08.2016
(51) Int. Cl.: F02B 75/04, F16C 7/06, F16C 7/04

(54) **LÄNGENVERSTELLBARE PLEUELSTANGE MIT ELEKTROMAGNETISCH BETÄTIGBAREM SCHALTVENTIL**
LENGTH-ADJUSTABLE CONNECTING ROD WITH ELECTROMAGNETICALLY-ACTUATABLE SWITCHING VALVE
BIELLE RÉGLABLE EN LONGUEUR POURVUE D'UNE SOUPAPE DE COMMANDE À ACTIONNEMENT ÉLECTROMAGNÉTIQUE

(30) Priorität: 14.12.2015 AT 510622015; 29.04.2016 AT 503902016; 31.05.2016 AT 505002016
(43) Veröffentlichungstag der Anmeldung: 24.10.2018
(73) Patentinhaber: AVL List GmbH, 8020 Graz (AT)
(72) Erfinder: MELDE-TUCZAI, Helmut, 8042 Graz (AT); THEISSL, Mario, 8541 Schwanberg (AT); LOESCH, Siegfried, 8051 Graz (AT); REDOUANE, Abdelkarim, 8047 Graz (AT); BODENSTEINER, Florian, 93051 Regensburg (DE); MUNTEANU, Anamaria, 71111 Waldenbuch (DE); ROBACZEWSKI, Miroslaw, 71272 Renningen (DE); WAND, Katrin, 72655 Altdorf (DE)
(74) Vertreter: Wallinger, Michael
(86) Internationale Anmeldenummer: PCT/EP2016/069094
(87) Internationale Veröffentlichungsnummer: WO 2017/102108

(56) Entgegenhaltungen:
- EP-A1- 0 438 121
- WO-A1-2014/188060
- DE-A1- 10 230 427
- DE-A1-102013 111 617
- US-A- 2 989 954

## Beschreibung

Die Erfindung betrifft eine längenverstellbare Pleuelstange für eine Hubkolbenmaschine, insbesondere für eine Hubkolbenbrennkraftmaschine, welche eine Hydraulikeinrichtung, mit welcher eine Länge der Pleuelstange einstellbar ist, und ein Schaltventil zur Steuerung eines Zu- und Abflusses der Hydraulikeinrichtung aufweist.

Ferner betrifft die Erfindung eine Hubkolbenmaschine mit einer erfindungsgemäßen Pleuelstange, insbesondere eine derartige, als Hubkolbenbrennkraftmaschine ausgebildete Hubkolbenmaschine, sowie ein Fahrzeug mit einer solchen Hubkolbenmaschine.

Das Pleuel einer Hubkolbenmaschine verbindet im Allgemeinen die Kurbelwelle mit dem Kolben, wobei das Pleuel die lineare Bewegung des Kraft- oder Arbeitskolbens in die kreisförmige Bewegung der Kurbelwelle (linear oszillierende Axialbewegung) oder umgekehrt eine kreisförmige in eine lineare Bewegung umsetzt.

Am kleineren Pleuelauge ist vorzugsweise der Kolben mit einem Kolbenbolzen befestigt, am größeren Pleuelauge ist im Allgemeinen ein Pleuellager vorgesehen, über welches das Pleuel an der sich drehenden Kurbelwelle befestigt ist. Zwischen dem kleineren Pleuelauge, welches sich am Pleuelkopf befindet, und dem größeren Pleuelauge, welches sich am Pleuelfuß befindet, ist dabei im Allgemeinen der Pleuelschaft angeordnet.

Verstellbare Pleuel werden insbesondere bei Hubkolbenmaschinen mit variablem Verdichtungsverhältnis zum Einstellen des Verdichtungsverhältnisses eingesetzt. Durch eine Verstellung der Pleuellänge kann das Verdichtungsverhältnis verändert werden, da der obere Totpunkt der Kolbenbewegung verschoben wird. Längenverstellbare Pleuel sind aus dem Stand der Technik grundsätzlich bekannt, beispielsweise aus der WO 2015/055582 A2, der AT 512 334 A1 oder der DE 10 2012 020 999 A1.

Im Allgemeinen stellt sich bei längenverstellbaren Pleuelstangen das Problem, wie eine Betätigung oder Steuerung der Längenverstellung der Pleuelstange von einem Betätigungssystem der Hubkolbenmaschine an das sich linearoszillierend bewegende Pleuel übertragen werden kann.

Im Stand der Technik finden sich beispielsweise für eine mechanische bzw. hydromechanische Übertragung folgende Ansätze:
Die Druckschrift WO 2014/019684 A1 betrifft eine Hubkolbenverbrennungskraftmaschine mit variabler Kompression mit einer Betätigungseinheit zur Änderung einer variablen Verdichtung der Hubkolbenverbrennungskraftmaschine, wobei die Betätigungseinheit zur Veränderung der variablen Kompression eine variable Triebwerkskomponente in Form von einem Pleuel mit einer variablen Länge, einem Kolben mit einer variablen Kompressionshöhe und/oder einer Kurbelwelle mit einem variablen Kurbelwellenradius der Hubkolbenbrennkraftmaschine betätigt und die Betätigungseinheit in einem unteren Bereich der Hubkolbenverbrennungskraftmaschine angeordnet ist.

Die Druckschrift DE 10 2005 055 199 A1 betrifft eine Hubkolbenverbrennungskraftmaschine mit zumindest einem einstellbar veränderbaren Verdichtungsverhältnis in einem Hubkolben mittels eines Verstellmechanismus, der zumindest einen in einem Pleuellagerauge oder an einem Hublagerauge eines Pleuels angeordneten Exzenter zur Änderung einer effektiven Länge des Pleuels umfasst, einen Verstellweg des Exzenters, entlang dessen der Exzenter mittels eines durch eine Bewegung des Pleuels hervorgerufenen wirkenden Drehmoments bewegbar ist, und zumindest einen veränderbaren Widerstand, der auf eine Verstellbewegung des Exzenters einwirkt und zumindest eine gedämpfte Verstellbewegung des Exzenters bewirkt.

In der PCT/EP 2016/064193 der Anmelderin wird die Längenverstellung des Pleuels über den Druck eines Hydraulikmediums gesteuert.

Die DE 102 30 427 A1 betrifft eine Schaltvorrichtung für einen Kurbelbetrieb einer Brennkraftmaschine, mit der eine zur Änderung der effektiven Pleuellänge vorgesehene Schwenkbewegung einer Exzenterschale auslösbar ist. Die Schaltvorrichtung umfasst eine im Bereich eines Pleuelauges drehbar angeordnete Exzentereinrichtung und eine Arretiereinrichtung, die selektiv in einen Freigabezustand, in welchem eine Drehung der Exzentereinrichtung in dem Pleuelauge möglich ist, bringbar ist. Die Schaltvorrichtung zeichnet sich dadurch aus, dass eine Spuleneinrichtung vorgesehen ist zur selektiven Generierung eines magnetischen Feldes, durch das die Arretierungseinrichtung in einen jeweils gewünschten Schaltzustand bringbar ist.

Es ist eine Aufgabe der Erfindung, eine verbesserte Pleuelstange bzw. ein verbessertes Pleuel für einen Hubkolbenmaschine bereitzustellen, dessen wirksame bzw. effektive Pleuellänge verstellt werden kann. Insbesondere ist es eine Aufgabe der Erfindung, eine Steuerung des Verstellens zu verbessern, insbesondere zuverlässiger zu machen. Weiter insbesondere ist es eine Aufgabe der Erfindung, die Übertragung eines Betätigungsimpulses zur Längenverstellung von einem Betätigungssystem an die Pleuelstange zu verbessern.

Diese Aufgabe wird durch eine Pleuelstange nach Anspruch 1 gelöst. Vorteilhafte Ausgestaltungen der Erfindung werden in den abhängigen Ansprüchen beansprucht. Die Lehre der Ansprüche wird hiermit zu einem Teil der Beschreibung gemacht.

Ein erster Aspekt der Erfindung betrifft eine längenverstellbare Pleuelstange für eine Hubkolbenmaschine, insbesondere eine Hubkolbenbrennkraftmaschine, aufweisend:
- eine Hydraulikeinrichtung, mit welcher eine Länge der Pleuelstange einstellbar ist, und
- ein Schaltventil zur Steuerung von Zu- und Abfluss eines Hydraulikmediums in die oder aus der Hydraulikeinrichtung,
wobei das Schaltventil elektromagnetisch betätigbar ist.

Ein zweiter Aspekt der Erfindung betrifft eine Hubkolbenmaschine, insbesondere eine Hubkolbenbrennkraftmaschine mit einer solchen längenverstellbaren Pleuelstange, und ein dritter Aspekt der Erfindung betrifft ein Fahrzeug mit einer Hubkolbenmaschine, insbesondere einer Hubkolbenbrennkraftmaschine, welche eine solche längenverstellbare Pleuelstange aufweist.

Eine Pleuelstange im Sinne der Erfindung ist ein üblicherweise ein bei Hubkolbenmaschinen vorhandenes, länglich ausgebildetes und zwischen Kolben und Kurbelwelle angeordnetes Verbindungselement, über welches der Kolben mechanisch mit der Kurbelwelle verbunden ist.

Eine Hubkolbenmaschine im Sinne der Erfindung ist eine Maschine, mit der eine lineare Hubbewegung eines Kolbens an eine Drehbewegung einer Welle umgesetzt werden kann bzw. umgekehrt eine Drehbewegung einer Welle an eine lineare Hubbewegung eines Kolbens.

Drainieren im Sinne der Erfindung bedeutet, dass ein Hydraulikmedium-Rücklauf, das heißt eine Verringerung des Hydraulikmediums in einem Arbeitsraum, ermöglicht wird. Ein Drainieren erfolgt insbesondere durch einen Abfluss von Hydraulikmedium aus der Hydraulikeinrichtung. Das Drainieren kann insbesondere durch Kräfte bzw. Drücke, welche von außerhalb der Pleuelstange auf die Pleuelstange wirken, beispielsweise durch den Zündvorgang in einer Verbrennungskraftmaschine oder durch eine Bewegung des Kolbens aufgrund der Kurbelwellenbewegung, beispielsweise Zentrifugalkräfte am oberen Totpunkt, erfolgen.

Ein Ankerelement im Sinne der Erfindung ist der bewegliche Teil eines elektromagnetischen Aktors, insbesondere eines Ventils, und weist vorzugsweise ferromagnetisches Material oder magnetisierbares Material auf, insbesondere besteht das Ankerelement aus diesem Material. Insbesondere kann ein Ankerelement ein oder mehrere Anker aufweisen.

Die Erfindung basiert insbesondere auf der Erkenntnis, dass eine elektromagnetische Betätigung eines Schaltventils zur Steuerung des Zuflusses von Hydraulikmedium in die Hydraulikeinrichtung bzw. des Abflusses von Hydraulikmedium aus der Hydraulikeinrichtung durch einen elektromagnetischen Steuerimpuls eine einfache Übertragung des Steuerimpulses auf die sich in Bewegung befindliche Pleuelstange ermöglicht. Vorzugsweise kann die zur Betätigung des Schaltventils eines solchen Schaltventils nötige elektrische Energie sowie der Betätigungsimpuls selbst über magnetische Induktion, vorzugsweise über zwei Spulen, wobei eine im Gehäuse der Hubkolbenmaschine angeordnet ist und eine an oder in der Pleuelstange selbst, verwirklicht werden.

Im Gegensatz zu einer hydraulischen Übertragung eines Betätigungsimpulses über die Leitungen eines Hydraulikmediums oder einer mechanischen Übertragung über mechanische Verstell-Elemente, wie sie aus dem Stand der Technik bekannt sind, kann eine Übertragung eines elektromagnetischen Betätigungsimpulses realisiert werden, ohne eine Signalführung über ein Lager, insbesondere das Hauptlager der Pleuelstange zur Kurbelwelle am große Pleuelauge, vorsehen zu müssen. Insbesondere müssen hierbei keine Bauteile vorgesehen werden, welche unmittelbar an einem solchen Lager angeordnet sind und daher dem durch eine Drehbewegung entstehenden Verschleiß unterliegen.

Des Weiteren entstehen auch keine Reibungsverluste durch zusätzliche Bauteile oder auch durch den Betätigungsimpuls selbst.

Insoweit Betätigungsenergie aus der Bewegung der Pleuelstange erfindungsgemäß durch magnetische Induktion abgezweigt wird, geht diese nicht verloren, da mit dieser das Schaltventil betätigt wird. Diese Betätigungsenergie wird dann auf der anderen Seite an elektrischer Energie zur Erzeugung eines Induktionsfelds eingespart.

In einer vorteilhaften Ausgestaltung der erfindungsgemäßen Pleuelstange weist diese einen ersten Pleuelstangenabschnitt und einen zweiten Pleuelstangenabschnitt auf, wobei die Pleuelstangenabschnitte zum Verstellen einer Pleuelstangenlänge, insbesondere entlang einer Längsachse der Pleuelstange, relativ zueinander verschiebbar sind. Vorzugsweise weist die Hydraulikeinrichtung dabei einen ersten Hydraulikzylinder mit einem ersten Druckraum und einem zweiten Druckraum auf, welche durch einen Kolben getrennt sind, wobei einer der beiden Pleuelstangenabschnitte mit dem Hydraulikzylinder und der andere der beiden Pleuelstangenabschnitte mit dem Kolben verbunden sind. Vorzugsweise weist die Pleuelstange eine Hydraulikmedium-Zuleitung und/oder eine Drainage-Leitung auf, welche mit dem ersten Druckraum und/oder dem zweiten Druckraum fluidkommunizierend verbindbar sind. In dieser vorteilhaften Ausgestaltung wird die Länge der Pleuelstange unmittelbar über die Stellung eines Kolbens in einem Hydraulikzylinder eingestellt. Die Hydraulikeinrichtung steuert dabei unmittelbar den Zu- und Abfluss des Hydraulikmediums in die Druckräume dieses Hydraulikzylinders. Die bei der Bewegung der Pleuelstange wirkenden Kräfte werden hierbei von dem Hydraulikzylinder aufgenommen und an das Hydraulikmedium weitergegeben. Sind die Hydraulikmedium-Zuleitung und gegebenenfalls die Drainage verschlossen, so wird eine Veränderung der Länge der Pleuelstange verhindert. Ist die Hydraulikmedium-Zuleitung bzw. die Drainage dagegen geöffnet, besonders durch die entsprechende Schaltstellung des Schaltventils, kann, je nach anliegenden Kräften bzw. Drücken, eine Veränderung der Länge der Pleuelstange bewirkt werden.

In einer weiteren vorteilhaften Ausgestaltung weist die längenverstellbare Pleuelstange einen ersten Pleuelstangenabschnitt mit einem Mutterabschnitt und einen zweiten Pleuelstangenabschnitt mit einem Spindelelementabschnitt auf, wobei der Mutterabschnitt und der Spindelelementabschnitt ineinandergreifen und zum Verstellen einer Pleuelstangenlänge, insbesondere entlang einer Längsachse der Pleuelstange, relativ zueinander drehbar sind, und wobei die Hydraulikeinrichtung eingerichtet ist, eine relative Drehung des Mutterabschnitts und des Spindelelementabschnitts zu steuern, und wobei die Pleuelstange eine Hydraulikmedium-Zuleitung und/oder eine Drainage aufweist, welche mit der Hydraulikeinrichtung fluidkommunizierend verbindbar sind. Alternativ oder zusätzlich zu einem Hydraulikzylinder mit einem Kolben kann zur eigentlichen Verstellung der Länge der Pleuelstange ein Gewindegetriebe vorgesehen sein. Das von diesem Gewindegetriebe gebildete Gewindegetriebe kann hierbei selbsthemmend oder nicht selbsthemmend ausgebildet sein. Ist das Gewinde nicht selbsthemmend, so kann eine Längenverstellung der Pleuelstange über die von außen auf die Pleuelstange wirkenden Kräfte erfolgen (passiv). Ist das Gewinde dagegen selbsthemmend, kann eine Längenverstellung der Pleuelstange beispielsweise über ein Drehschieberventil erfolgen, welches entweder mit dem Mutterabschnitt oder dem Spindelelementabschnitt drehfest verbunden ist (aktiv). Durch das Vorsehen des Gewindegetriebes können die auf ein elektromagnetisch betätigbares Schaltventil wirkenden Kräfte bzw. Drücke wesentlich reduziert oder sogar vermieden werden.

In einer weiteren vorteilhaften Ausgestaltung der Pleuelstange weist die Hydraulikeinrichtung des Weiteren ein Betätigungsventil, insbesondere ein Schieberventil, auf, wobei das Schaltventil zur hydraulischen Betätigung des Betätigungsventils ausgebildet ist und das Betätigungsventil zum Öffnen bzw. Verschließen einer fluidkommunizierenden Verbindung zwischen der Hydraulikmedium-Zuleitung und der Drainage-Leitung mit den beiden Druckräumen oder zum Erzeugen einer relativen Drehung zwischen dem Mutterabschnitt und dem Spindelelement ausgebildet ist. Durch das Vorsehen eines Betätigungsventils, zusätzlich zu dem Schaltventil, welches von dem Schaltventil hydraulisch betätigt wird, können Kräfte bzw. Drücke, welche auf die längenverstellbare Pleuelstange einwirken, von dem Betätigungsventil aufgenommen bzw. reduziert werden. Hierdurch ist es möglich, ein elektromagnetisch betätigtes Schaltventil, welches je nach Ausführung nur vergleichsweise geringe anliegende Kräften bzw. Drücke halten kann, zur Steuerung der Hydraulikeinrichtung einzusetzen.

In einer weiteren vorteilhaften Ausgestaltung der längenverstellbaren Pleuelstange liegen die in eine Achse des Betätigungsventils und eine Achse des Schaltventils in einer Ebene, insbesondere sind die Achsen achsparallel ausgerichtet. Vorzugsweise sind die Achsen der Ventile jeweils so ausgerichtet, dass möglichst geringe äußere Kräfte, beispielsweise Zentrifugalkräfte, auf die beweglichen Teile der Ventile wirken. In dieser Ausgestaltung sind beide Ventile vorzugsweise parallel ausgerichtet.

In einer weiteren vorteilhaften Ausgestaltung der längenverstellbaren Pleuelstange sind eine Achse des Schließventils und eine Achse des Schaltventils achsparallel zur Kurbelwelle angeordnet. In dieser Ausgestaltung können Kräfte, die aufgrund von Beschleunigung bzw. Verzögerung der Bewegung der Pleuelstange entstehen, keinen Einfluss auf die Schaltwirkung der Ventile ausüben.

In einer weiteren vorteilhaften Ausgestaltung weist das Betätigungsventil einen zweiten Hydraulikzylinder mit einer ersten Kammer und einer zweiten Kammer auf, welche durch einen Stellkolben getrennt sind, wobei der Stellkolben eingerichtet ist, wenigstens ein Schließventil, insbesondere ein Kugelventil, zu betätigen oder mit dem Mutterabschnitt oder dem Spindelelementabschnitt drehfest verbunden ist. Vorzugsweise kann das Betätigungsventil dabei die Kugel des Kugelventils von einem Ventilsitz entfernen, um eine Drainage eines Druckraums zu ermöglichen. Alternativ kann das Betätigungsventil vorzugsweise eine Drehbewegung eines Gewindegetriebes durch äußere Kräfte bzw. Drücke auf die Pleuelstange unterbinden (passiv) oder durch Aufbringen einer Kraft auf das Gewindegetriebe eine Längenverstellung bewirken (aktiv).

In einer weiteren vorteilhaften Ausgestaltung der längenverstellbaren Pleuelstange weist das Schaltventil, insbesondere ein 4/3-Wegeventil, einen Einlass, einen ersten Auslass, einen zweiten Auslass, einen ersten Schalt-Anschluss, welcher in einem ersten Schaltzustand des Schaltventils mit dem Einlass und in einem zweiten Schaltzustand des Schaltventils mit dem ersten Auslass fluidkommunizierend verbunden ist, und einen zweiten Schalt-Anschluss, welcher in einem zweiten Schaltzustand des Schaltventils mit dem Einlass oder in einem ersten Schaltzustand des Schaltventils mit dem zweiten Auslass fluidkommunizierend verbunden ist, auf, wobei das Schaltventil mit der Hydraulikeinrichtung über den ersten Schalt-Anschluss und den zweiten Schalt-Anschluss fluidkommunizierend verbunden ist. Vorzugsweise sind der erste Auslass und der zweite Auslass mit wenigstens einer Drainage verbunden oder bilden die Drainage, und der Einlass ist mit einer Hydraulikmedium-Zuleitung verbunden. Durch das Vorsehen von zwei Schalt-Anschlüssen und zwei Auslässen können mit dem Schaltventil zwei Druckräume bzw. Kammern unabhängig voneinander mit Hydraulikmedium befüllt oder drainiert werden.

In einer weiteren vorteilhaften Ausgestaltung der längenverstellbaren Pleuelstange weist das Schaltventil auf:
- Einen Einlass,
- einen ersten Auslass, und
- einen ersten Schalt-Anschluss, welcher in einem ersten Schaltzustand des Schaltventils mit dem Einlass oder in einem zweiten Schaltzustand des Schaltventils mit dem ersten Auslass fluidkommunizierend verbunden ist.

Vorzugsweise ist der Auslass mit einer Drainage verbunden oder bildet die Drainage. Der Einlass ist vorzugsweise mit einer Hydraulikmedium-Zuleitung verbunden. Durch ein solches Schaltventil kann eine Befüllung oder Drainage einer Kammer eines Betätigungsventils oder eines Druckraums eines Hydraulikzylinders kontrolliert werden. Je nach Menge an Hydraulikmedium, welches sich in der Kammer oder dem Druckraum befindet, kann bei einem System, bei welchem die Pleuelstange mittels äußerer Kräfte verstellt wird, die Länge exakt eingestellt bzw. festgestellt bzw. festgesetzt werden.

In einer weiteren vorteilhaften Ausgestaltung der längenverstellbaren Pleuelstange sind der erste Druckraum oder die erste Kammer mit dem ersten Schalt-Anschluss und der zweite Druckraum oder die zweite Kammer mit dem zweiten Schalt-Anschluss fluidkommunizierend verbunden.

In einer weiteren vorteilhaften Ausgestaltung der längenverstellbaren Pleuelstange weist das Schaltventil auf:
- eine erste Spule; und
- ein Ankerelement, welches ein ferromagnetisches oder magnetisierbares Material aufweist und zwischen genau zwei Schaltstellungen verschiebbar ist.

In einer weiteren vorteilhaften Ausgestaltung der längenverstellbaren Pleuelstange werden das Ankerelement und die erste Spulen in einer gemeinsamen Aufnahme gelagert, wobei das Ankerelement durch eine einzige erste Rückstelleinrichtung, insbesondere ein Federelement, welche mit der Aufnahme, insbesondere mit Deckelelementen der Aufnahme, zusammenwirkt, in einer definierten Position, vorzugsweise einer ersten Schaltstellung gehalten wird.

Eine Aufnahme im Sinne der Erfindung ist eine Gesamtheit, in welcher das Schaltventil aufgenommen wird. Eine Aufnahme kann insbesondere ein gesondertes Gehäuse oder eine Bohrung oder ein Hohlraum, vorzugsweise in der Pleuelstange selbst, sein.

In einer weiteren vorteilhaften Ausgestaltung der längenverstellbaren Pleuelstange weist das Schaltventil eine neutrale Stellung auf, in welcher der Zu- und Abfluss in/aus der Hydraulikeinrichtung verhindert wird und vorzugsweise keine elektromagnetische Betätigung des Schaltventils stattfindet, insbesondere keine elektromagnetische Induktion. Dies ist besonders vorteilhaft, da eine eingestellte Länge der Pleuelstange gehalten werden kann, ohne dass eine Betätigung des Schaltventils notwendig ist. Insbesondere kann hierdurch Energie eingespart werden und bei einem Ausfall der elektromagnetischen Betätigung kann eine Hubkolbenmaschine weiterbetrieben werden, wobei die zuletzt eingestellte Länge der Pleuelstange beibehalten wird.

Bei einer neutralen Schaltstellung im Sinne der Erfindung sind der Schalt-Anschluss bzw. die Schalt-Anschlüsse weder mit dem Einlass noch mit dem Auslass verbunden. Insbesondere sind insbesondere sind der erste Schalt-Anschluss und der zweite Schalt-Anschluss in der neutralen Schaltstellung weder mit dem Einlass noch mit einem der Auslässe verbunden und vorzugsweise verschlossen.

In einer weiteren vorteilhaften Ausgestaltung der längenverstellbaren Pleuelstange weist das Schaltventil auf:
- Eine erste Spule und eine zweite Spule, welche voneinander beabstandet sind, und
- ein Ankerelement, welches ein ferromagnetisches oder magnetisierbares Material aufweist und zwischen wenigstens zwei, insbesondere drei, Schaltstellungen verschiebbar ist.

In einer weiteren vorteilhaften Ausgestaltung der längenverstellbaren Pleuelstange werden das Ankerelement und die Spulen in einer gemeinsamen Aufnahme gelagert und das Ankerelement wird durch zwei Rückstelleinrichtungen, insbesondere Federelementen, welche mit der Aufnahme, insbesondere mit Deckelelementen der Aufnahme, zusammenwirken, in einer definierten Position, vorzugsweise einer neutralen Schaltstellung gehalten.

In einer weiteren vorteilhaften Ausgestaltung der längenverstellbaren Pleuelstange weist das Ankerelement wenigstens eine radiale Zuleitungsbohrung und wenigstens eine axiale Zuleitungsbohrung auf, welche fluidkommunizierend verbunden sind und eingerichtet sind, um den Einlass mit dem ersten Schalt-Anschluss oder mit dem zweiten Schalt-Anschluss fluidkommunizierend zu verbinden, und/oder wobei das Ankerelement wenigstens eine radiale Drainagebohrung und wenigstens eine axiale Drainagebohrung aufweist, welche fluidkommunizierend verbunden sind und eingerichtet sind, den ersten Schalt-Anschluss mit dem ersten Auslass und den zweiten Schalt-Anschluss mit dem zweiten Auslass fluidkommunizierend zu verbinden. In dieser Ausgestaltung stehen Drücke des Hydraulikmediums in dem ersten Schalt-Anschluss oder in dem zweiten Schalt-Anschluss ausschließlich senkrecht zur Bewegungsrichtung des Ankerelements an. Daher kann durch diese Drücke vorzugsweise keine Bewegung des Ankerelements ohne eine elektromagnetische Betätigung erzeugt werden, was ein ungewolltes Schalten zwischen Schaltstellungen verhindert oder zumindest erschwert.

In einer weiteren vorteilhaften Ausgestaltung der längenverstellbaren Pleuelstange weist das Ankerelement zwei axiale Drainagebohrungen auf, und radiale Drainagebohrungen sind entweder mit einer ersten axialen Drainagebohrung oder mit einer zweiten axialen Drainagebohrung verbunden, wobei die radialen Drainagebohrungen, welche mit den unterschiedlichen axialen Drainagebohrungen verbunden sind, axial in Bezug auf das Ankerelement jeweils in einer anderen Ebene liegen.

In einer weiteren vorteilhaften Ausgestaltung der längenverstellbaren Pleuelstange liegen radiale Drainagebohrungen, welche mit derselben axialen Drainagebohrung verbunden sind, in einer Ebene.

In einer weiteren vorteilhaften Ausgestaltung der längenverstellbaren Pleuelstange verbindet wenigstens eine radiale Drainagebohrung, welche mit der zweiten axialen Drainagebohrung verbunden ist, im ersten Schaltzustand den zweiten Schalt-Anschluss mit dem zweiten Auslass, und wenigstens eine radiale Drainagebohrung, welche mit der ersten axialen Drainagebohrung verbunden ist, verbindet im zweiten Schaltzustand den ersten Schalt-Anschluss mit dem ersten Auslass.

In einer weiteren vorteilhaften Ausgestaltung der längenverstellbaren Pleuelstange sind die wenigstens eine radiale Zuleitungsbohrung und die wenigstens eine radiale Drainagebohrung und/oder die wenigstens eine axiale Zuleitungsbohrung und die wenigstens eine axiale Drainagebohrung in der Weise in dem Ankerelement angeordnet, dass diese keine Verbindung aufweisen, wobei insbesondere die wenigstens eine radiale Zuleitungsbohrung und die wenigstens eine radiale Drainagebohrung axial in Bezug auf eine Achse des Ankerelements in einer anderen Ebene liegen, und wobei die wenigstens eine axiale Zuleitungsbohrung und die wenigstens eine axiale Drainagebohrung radial in Bezug auf eine Achse des Ankerelements verschoben sind.

In einer weiteren vorteilhaften Ausgestaltung der längenverstellbaren Pleuelstange weist das Ankerelement eine erste Umlaufnut auf, welche die radialen Zuleitungsbohrungen fluidkommunizierend miteinander verbindet. Umlaufnuten ermöglichen, dass die Öffnungen der einzelnen Elemente der Pleuelstange nicht fluchtend ausgerichtet sein müssen, wenn zwischen diesen eine Fluidverbindung hergestellt werden soll.

In einer weiteren vorteilhaften Ausgestaltung ist im ersten Schaltzustand ein erster Spalt zwischen dem Ankerelement und dem Gehäuse vorhanden, durch welchen eine fluidkommunizierende Verbindung zwischen Einlass und erstem Schalt-Anschluss gebildet wird, und im zweiten Schaltzustand ein zweiter Spalt zwischen dem Ankerelement und dem Gehäuse vorhanden ist, durch welchen eine fluidkommunizierende Verbindung zwischen dem Einlass und dem zweiten Schalt-Anschluss gebildet wird.

In einer weiteren vorteilhaften Ausgestaltung der längenverstellbaren Pleuelstange weist das Ankerelement eine erste Umlaufnut auf, welche eingerichtet ist, um den Einlass in einem ersten Schaltzustand mit dem ersten Schaltanschluss und in einem zweiten Schaltzustand mit dem zweiten Schaltanschluss fluidkommunizierend zu verbinden.

In einer weiteren vorteilhaften Ausgestaltung der längenverstellbaren Pleuelstange sind die Deckelelemente oder Federteller mit Sicherungsringen an der Aufnahme befestigt.

In einer weiteren vorteilhaften Ausgestaltung der längenverstellbaren Pleuelstange weist die Aufnahme auf:
- eine erste Nut, welche in der Weise ausgebildet ist, um im ersten Schaltzustand die wenigstens eine radiale Zuleitungsbohrung oder eine radiale Drainagebohrung mit dem ersten Schalt-Anschluss zu verbinden und/oder im zweiten Schaltzustand die erste Umlaufnut des Ankerelements mit dem ersten Schaltanschluss zu verbinden, und
- eine zweite Nut, welche in der Weise ausgebildet ist, um im ersten Schaltzustand die wenigstens eine radiale Zuleitungsbohrung oder eine radiale Drainagebohrung mit dem zweiten Schalt-Anschluss zu verbinden und/oder im zweiten Schaltzustand die erste Umlaufnut des Ankerelements mit dem zweiten Schaltanschluss zu verbinden.

In einer weiteren vorteilhaften Ausgestaltung der längenverstellbaren Pleuelstange sind die Federelemente radial in Bezug auf eine Achse des Ankerelements innerhalb oder außerhalb der Spulen angeordnet.

In einer weiteren vorteilhaften Ausgestaltung der längenverstellbaren Pleuelstange weist das Ankerelement einen ersten Anker und einen zweiten Anker auf, welche jeweils von einem Federelement an einem Mittelteil der Aufnahme abgestützt werden. In dieser Ausführungsform können beide Anker vorzugsweise unabhängig voneinander betätigt werden. Auf diese Weise kann beispielsweise eine Funktionsüberprüfung des Schaltventils vorgenommen werden, ohne dass eine Längenverstellung des Pleuels stattfindet.

In einer weiteren vorteilhaften Ausgestaltung weist die längenverstellbare Pleuelstange zwei Verschlusselemente auf, wobei ein erstes Verschlusselement in Bezug auf den ersten Anker gegenüber eines Mittelteils der Aufnahme angeordnet ist und wobei ein zweites Verschlusselement in Bezug auf den zweiten Anker gegenüber des Mittelteils angeordnet ist.

In einer weiteren vorteilhaften Ausgestaltung weist das erste Verschlusselement radiale und axiale Bohrungen auf, welche miteinander verbunden sind und im ersten Schaltzustand den Einlass und den ersten Schalt-Anschluss fluidkommunizierend verbinden und im zweiten Schaltzustand den ersten Auslass und den ersten Schalt-Anschluss fluidkommunizierend verbinden, und wobei das zweite Verschlusselement radiale und axiale Bohrungen aufweist, welche im zweiten Schaltzustand den Einlass und den zweiten Schalt-Anschluss fluidkommunizierend verbinden und im ersten Schaltzustand den zweiten Auslass und den zweiten Schalt-Anschluss fluidkommunizierend verbinden.

In einer weiteren vorteilhaften Ausgestaltung der längenverstellbaren Pleuelstange ist zwischen den Ankern und der Aufnahme wenigstens ein Hohlraum, insbesondere wenigstens eine Axialnut, gebildet, welche vorzugsweise mit Ankerelementen ausgebildet ist.

In einer weiteren vorteilhaften Ausgestaltung der längenverstellbaren Pleuelstange wird im ersten Schaltzustand zwischen dem ersten Verschlusselement und dem ersten Anker ein erster Spalt gebildet, welcher den Einlass mit den radialen und axialen Bohrungen des ersten Verschlusselements, insbesondere über den Hohlraum, fluidkommunizierend verbindet, und im zweiten Schaltzustand wird zwischen dem zweiten Verschlusselement und dem zweiten Anker ein zweiter Spalt gebildet, welcher den Einlass mit den radialen und axialen Bohrungen des zweiten Verschlusselements, insbesondere über den Hohlraum, fluidkommunizierend verbindet.

In einer weiteren vorteilhaften Ausgestaltung der längenverstellbaren Pleuelstange weisen das erste Verschlusselement und das zweite Verschlusselement Nuten, insbesondere Umlaufnuten, auf, welche vorzugsweise eingerichtet sind, um jeweils mehrere radiale Bohrungen fluidkommunizierend miteinander zu verbinden.

In einer weiteren vorteilhaften Ausgestaltung der längenverstellbaren Pleuelstange werden die Ankerelemente von den Verschlusselementen und/oder von der Aufnahme geführt.

In einer weiteren vorteilhaften Ausgestaltung weist die längenverstellbare Pleuelstange ein erstes Deckelement auf, welches die axialen Bohrungen des ersten Verschlusselements im ersten Schaltzustand zur Außenseite des Schaltventils hin verschließt, und ein zweites Deckelement, welches die axialen Bohrungen des zweiten Verschlusselements im zweiten Schaltzustand zu der Außenseite des Schaltventils hin verschließt.

In einer weiteren vorteilhaften Ausgestaltung der längenverstellbaren Pleuelstange weist die Aufnahme in dem Bereich, in welchem der Einlass angeordnet ist, welcher insbesondere in zwei Einlassrohre geteilt ist, wenigstens eine Umlaufnut auf, welche eingerichtet ist, um den ersten Spalt zwischen dem ersten Verschlusselement und dem ersten Ankerelement und/oder dem zweiten Spalt zwischen dem zweiten Verschlusselement und dem zweiten Ankerelement fluidkommunizierend mit dem Einlass zu verbinden.

In einer weiteren vorteilhaften Ausgestaltung der längenverstellbaren Pleuelstange ist zwischen dem ersten Anker und dem ersten Verschlusselement ein erster Durchlass, insbesondere eine Öffnung, angeordnet, welche einen ersten Spalt mit dem ersten Schalt-Anschluss verbindet, und wobei zwischen dem zweiten Anker und dem zweiten Verschlusselement ein zweiter Durchlass, insbesondere eine Öffnung angeordnet ist, welche den zweiten Spalt mit dem zweiten Schalt-Anschluss verbindet.

Diese und weitere Merkmale und Vorteile gehen außer aus den Ansprüchen und aus der Beschreibung aus den Zeichnungen hervor, wobei die einzelnen Merkmale jeweils für sich allein oder zu mehreren in Form von Unterkombinationen bei einer Ausgestaltung der Erfindung verwirklicht sein können und eine vorteilhafte sowie für sich schutzfähige Ausführung darstellen können, sofern dies nicht ausdrücklich ausgeschlossen ist.

Die im Vorhergehenden ausgeführten Merkmale und Vorteile in Bezug auf den ersten Aspekt der Erfindung gelten auch für den zweiten und dritten Aspekt der Erfindung entsprechend.

Die Erfindung wird im Folgenden anhand von nicht einschränkenden Ausführungsbeispielen, die in den Figuren wenigstens teilweise dargestellt sind, näher erläutert. Weitere Merkmale und Vorteile ergeben sich aus diesen Ausführungsbeispielen im Zusammenhang mit den entsprechenden Figuren. Es zeigen wenigstens teilweise schematisch:
- **Figur 1**: eine Draufsicht eines ersten Ausführungsbeispiels einer erfindungsgemäßen Pleuelstange 7;
- **Figur 2**: eine Draufsicht eines zweiten Ausführungsbeispiels einer erfindungsgemäßen Pleuelstange 7;
- **Figur 3**: eine Darstellung der Anschlüsse eines ersten Typs des erfindungsgemäßen Schaltventils;
- **Figur 4**: einer Darstellung der Anschlüsse eines zweiten Typs des erfindungsgemäßen Schaltventils;
- **Figur 5**: ein Schaltsymbol für ein erfindungsgemäßes Schaltventil vom Typ gemäß Fig. 3;
- **Figur 6**: eine Darstellung eines ersten Ausführungsbeispiels eines erfindungsgemäßen Schaltventils;
- **Figur 7**: einen Querschnitt entlang der Ebene C-C aus Fig. 6;
- **Figur 8**: einen Querschnitt entlang der Ebene D-D aus Fig. 6;
- **Figur 9**: eine perspektivische Draufsicht eines Ankers des ersten Ausführungsbeispiels gemäß Fig. 6;
- **Figur 10**: eine weitere Darstellung des ersten Ausführungsbeispiels gemäß Fig. 6;
- **Figur 11**: eine Darstellung eines zweiten Ausführungsbeispiels des erfindungsgemäßen Schaltventils;
- **Figur 12**: eine perspektivische Draufsicht einer Hülse des zweiten Ausführungsbeispiels gemäß Fig. 11;
- **Figur 13**: eine perspektivische Draufsicht eines Ankerelements des zweiten Ausführungsbeispiels gemäß Fig. 11;
- **Figur 14**: eine weitere Darstellung des zweiten Ausführungsbeispiels gemäß Fig. 11;
- **Figur 15**: eine alternative Ausgestaltung des zweiten Ausführungsbeispiels;
- **Figur 16**: eine weitere alternative Ausgestaltung des zweiten Ausführungsbeispiels;
- **Figur 17**: eine Darstellung eines dritten Ausführungsbeispiels des erfindungsgemäßen Schaltventils;
- **Figur 18**: eine alternative Ausgestaltung des dritten Ausführungsbeispiels gemäß Fig. 17;
- **Figur 19**: eine Darstellung eines vierten Ausführungsbeispiels des erfindungsgemäßen Schaltventils;
- **Figur 20**: eine weitere Darstellung des vierten Ausführungsbeispiels gemäß Fig. 19;
- **Figur 21**: eine Darstellung eines fünften Ausführungsbeispiels eines erfindungsgemäßen Schaltventils;
- **Figur 22**: eine seitliche Draufsicht der Elemente des erfindungsgemäßen Schaltventils des fünften Ausführungsbeispiels gemäß Fig. 21 ohne eine Aufnahme;
- **Figur 23**: eine perspektivische Draufsicht eines Ankers des fünften Ausführungsbeispiels gemäß Fig. 21;
- **Figur 24**: einen Querschnitt der Schnittebene D-D des fünften Ausführungsbeispiels gemäß Fig. 21;
- **Figur 25**: eine weitere Darstellung des fünften Ausführungsbeispiels gemäß Fig. 21;
- **Figur 26**: eine Darstellung eines sechsten Ausführungsbeispiels des erfindungsgemäßen Schaltventils; und
- **Figur 27**: eine weitere Darstellung des sechsten Ausführungsbeispiels gemäß Fig. 26.

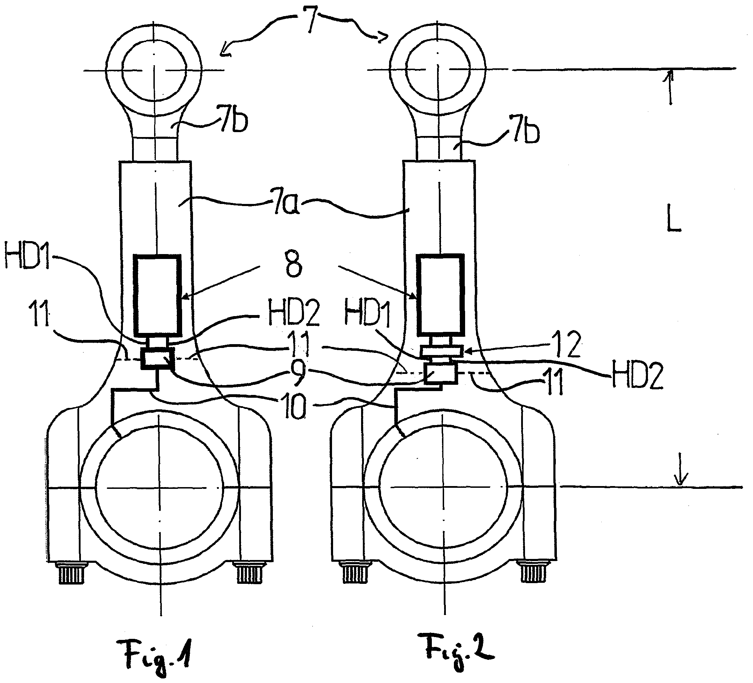

Die **Figuren 1 und 2** zeigen zwei Ausführungsbeispiele einer erfindungsgemäßen längenverstellbaren Pleuelstange 7.

Die Pleuelstange 7 weist einen ersten Pleuelstangenabschnitt 7a und einen zweiten Pleuelstangenabschnitt 7b auf. Diese sind vorzugsweise teleskopartig ineinander schiebbar. In dem dargestellten Fall nimmt der erste Pleuelstangenabschnitt 7a, welcher mit dem großen Pleuelauge fest verbunden ist, den zweiten Pleuelstangenabschnitt 7b, welcher mit dem kleinen Pleuelauge fest verbunden ist, auf.

Die Längenverstellung der Pleuelstange 7 kann hierbei hydraulisch, beispielsweise mittels eines Hydraulikzylinders, welcher einen Kolben aufweist, oder mechanisch, beispielsweise über ein Gewindegetriebe, welche einen Mutterabschnitt und einen Spindelelementabschnitt aufweist, erfolgen.

Ein hydraulisches System ist beispielsweise in der eingangs genannte WO 2015/055582 A2 beschrieben. Diese bezieht sich auf eine längenverstellbare Pleuelstange für eine Hubkolbenmaschine, insbesondere für eine Brennkraftmaschine, mit zumindest einem ersten Stangenteil mit einem kleinen Pleuelauge und mit einem zweiten Stangenteil mit einem großen Pleuelauge, welche beiden Stangenteile teleskopartig zu und/oder ineinander verschiebbar sind, wobei der zweite Stangenteil ein Führungszylinder und der erste Stangenteil ein im Führungszylinder längsverschiebbares Kolbenelement ausbilden, wobei auf der dem großen Pleuelauge zugewandten Seite des Kolbenelements zwischen dem zweiten Stangenteil und dem Kolbenelement ein erster Hochdruckraum aufgespannt ist, in dem zumindest ein erster Ölkanal einmündet, in welchem insbesondere ein in Richtung des ersten Hochdruckraums öffnendes erstes Rückschlagventil angeordnet ist, wobei vom ersten Hochdruckraum zumindest ein erster Rücklaufkanal ausgeht, dessen Abflussquerschnitt durch ein Steuerventil in einer ersten Stellung verschließbar und in einer zweiten Stellung freigebbar ist, wobei vorzugsweise das Steuerventil einen in einer Aufnahmebohrung des zweiten Stangenteils der Pleuelstange axial verschiebbaren Stellkolben aufweist, welcher insbesondere durch eine Rückstellfeder in die erste Stellung und durch eine Betätigungskraft entgegen der Kraft der Rückstellfeder in die zweite Stellung verschiebbar ist, wobei das Kolbenelement als zweiseitig wirkender Kolben, vorzugsweise als Stufenkolben, ausgebildet ist.

Ein System, in welchem ein Schraubgetriebe bzw. eine Drehspindel zum Einsatz kommt, ist beispielsweise aus der Anmeldung A 50725/2015 bekannt. Dort wird eine längenverstellbare Pleuelstange für eine Hubkolbenmaschine, insbesondere für eine Brennkraftmaschine, beschrieben, mit zumindest einem ersten Stangenteil und einem zweiten Stangenteil, welche beiden Stangenteile relativ zueinander über ein Schraubgetriebe in Richtung der Längsachse der Pleuelstange verschiebbar sind, wobei das Schraubgetriebe zumindest einen ersten Getriebeteil und einen mit dem ersten Getriebeteil im Eingriff stehenden zweiten Getriebeteil aufweist, wobei der erste Getriebeteil als Spindelmutter bzw. Gewindespindel und der zweite Getriebeteil als Gewindespindel bzw. als Spindelmutter ausgebildet ist, wobei das Schraubgetriebe nicht selbsthemmend ausgebildet ist, wobei ein - vorzugsweise im ersten Stangenteil drehbar gelagerter - erster Getriebeteil mit zumindest einer mittels zumindest einer Schalteinrichtung schaltbaren Drehsperreinrichtung verbunden ist, welcher in zumindest einer ersten Stellung ein Verdrehen des ersten Getriebeteils in zumindest einer Drehrichtung verhindert und in zumindest einer zweiten Stellung ermöglicht.

Der Inhalt der Anmeldung WO 2015/055582 A2 und der Anmeldung A 50725/2015 wird durch ausdrückliche Bezugnahme auch zum Gegenstand dieser Anmeldung gemacht. Insbesondere hydraulische oder mechanische Ausführungen zur Verstellung der Länge der Pleuelstange 7 können wie in diesen beiden Druckschriften beschrieben ausgebildet sein.

Unabhängig davon, ob die Längenverstellung über einen Hydraulikkolben oder eine sonstige Einrichtung bewerkstelligt wird, kann die jeweilige Einrichtung erfindungsgemäß hydraulisch gesteuert werden. Die in den Figuren 1 und 2 gezeigte Hydraulikeinrichtung 8 kann die Einrichtung zur Längenverstellung hierbei umfassen oder diese, wie im Fall eines Hydraulikkolbens, bilden, oder, wie im Fall eines Schraubgewindes, die Einrichtung zur Längenverstellung steuern oder betätigen.

Vorzugsweise weist die Hydraulikeinrichtung 8, wie in Fig. 2 gezeigt, des Weiteren ein Betätigungsventil 12 auf. Ein solches Betätigungsventil, welches insbesondere als Schieberventil oder Drehschieberventil ausgebildet sein kann, wird insbesondere in der PCT/EP2016/064194 der Anmelderin beschrieben. Diese betrifft eine längenverstellbare Pleuelstange bzw. ein längenverstellbares Pleuel für eine Hubkolbenmaschine mit zumindest einem ersten Stangenteil und einem zweiten Stangenteil, wobei die beiden Stangenteile mittels einer Längenverstellvorrichtung in Richtung einer Längsachse der Pleuelstange insbesondere teleskopartig zu- und/oder ineinander verschiebbar sind, wobei die Längenverstellvorrichtung über zumindest einen Hydraulikkanal mit einem Hydraulikmedium beschickbar ist und wobei der wenigstens eine Hydraulikkanal durch eine Steuereinrichtung mit zumindest einem Hydraulikmediumversorgungskanal strömungsverbindbar ist, wobei die Steuereinrichtung ein erstes Ventil und ein zweites Ventil mit jeweils einem in einem Ventilraum angeordneten Ventilkörper aufweist, wobei die Ventilkörper jeweils durch eine Rückstellkraft gegen einen Ventilsitz pressbar sind, wobei ein erster Ventilraum des ersten Ventils mit einem ersten Hydraulikkanal und ein zweiter Ventilraum des zweiten Ventils mit einem zweiten Hydraulikkanal strömungsverbunden ist, und die Ventilkörper über eine zumindest zwischen einer ersten Stellung und einer zweiten Stellung verschiebbare Verbindungseinrichtung miteinander wirkverbunden sind, wobei in der ersten Stellung der Verbindungseinrichtung der erste Ventilkörper und in der zweiten Stellung der Verbindungseinrichtung der zweite Ventilkörper durch die Verbindungseinrichtung jeweils entgegen der Rückstellkraft von dem zugeordneten ersten bzw. zweiten Ventilsitz abhebbar ist und der entsprechende erste bzw. zweite Ventilraum mit dem Hydraulikmediumversorgungskanal strömungsverbindbar ist, und jeweils in der anderen Stellung der Verbindungseinrichtung der erste Ventilkörper am ersten Ventilsitz bzw. der zweite Ventilkörper am zweiten Ventilsitz aufliegt und die Strömungsverbindung zum Hydraulikmediumversorgungskanal sperrt.

Der Inhalt dieser Anmeldung PCT/EP2016/064193 wird durch ausdrückliche Bezugnahme auch zum Gegenstand dieser Anmeldung gemacht. Insbesondere die Ausführung der Längenverstellvorrichtung sowie der Steuerungseinrichtung, die hydraulische und/oder mechanische Verschaltung der Steuerungseinrichtung und der Längenverstellvorrichtung sowie Anordnung und Ausrichtung der Steuerungseinrichtung können erfindungsgemäß wie in der genannten PCT/EP 2016/064193 ausgeführt sein.

Den beiden Ausführungsbeispielen der Figuren 1 und 2 ist gemein, dass diese ein Schaltventil 9 zur Steuerung von Zu- und Abfluss eines Hydraulikmediums in die oder aus der Hydraulikeinrichtung 8 aufweisen.

Die Hydraulikmedium-Zuleitung wird, wie in den Figuren 1 und 2 gezeigt, vorzugsweise mit einem unter Druck stehenden Hydraulikmedium, insbesondere Öl oder Drucköl, aus dem großen Pleuelauge bzw. dem Hauptlager der Pleuelstange 7 versorgt. Insbesondere ist das Hydraulikmedium hierbei Schmieröl, welches dem Hauptlager zugeführt wird.

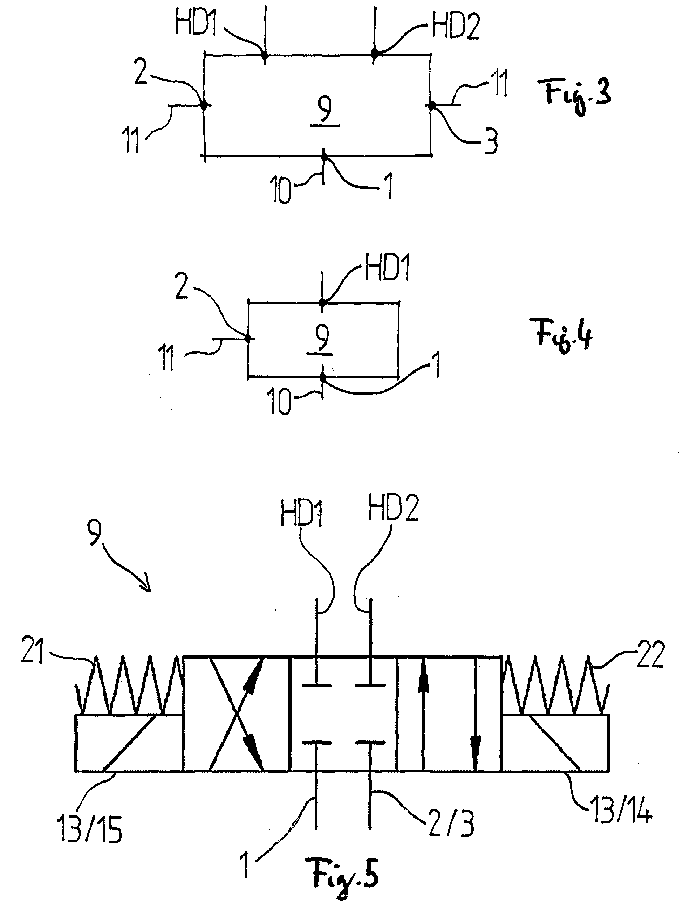

Vorzugsweise weist das Schaltventil 9, wie in **Fig. 3** gezeigt, fünf Anschlüsse auf. Einen Einlass für Hydraulikmedium, welcher vorzugsweise mit einer Hydraulikmedium-Zuleitung 10 verbunden ist, einen ersten Auslass 2, welcher vorzugsweise mit einer Drainage 11 verbunden ist, einen zweiten Auslass 3, welcher vorzugsweise ebenfalls mit einer Drainage 11 verbunden ist, und einen ersten Schalt-Anschluss HD1 sowie einen zweiten Schalt-Anschluss HD2, welche mit der Hydraulikeinrichtung 8 und/oder dem Schließventil 12 verbunden sind.

Vorzugsweise sind die Schalt-Anschlüsse HD1, HD2 jeweils mit einem Druckraum eines Hydraulikzylinders der Hydraulikeinrichtung 8 verbunden, wenn die Einrichtung zur Längenverstellung hydraulisch ausgeführt ist. In diesem Fall können diese beiden Druckräume jeweils durch Verbinden mit einer Hydraulikmedium-Zuleitung 10 oder mit einer Drainage 11 mit Hydraulikmedium befüllt oder drainiert, d.h. entleert, werden.

Das zweite Ausführungsbeispiel der Fig. 2 unterscheidet sich von dem ersten Ausführungsbeispiel der Fig. 1 insbesondere dadurch, dass zwischen das Schaltventil 9 und die Hydraulikeinrichtung 8 zusätzlich ein Betätigungsventil, insbesondere ein Schieberventil oder Drehschieberventil geschaltet ist. Ist ein solches des Weiteren vorhanden, so weist dieses vorzugsweise einen Stellkolben bzw. Ventilkörper auf, welcher einen Hydraulikzylinder in eine erste Kammer und eine zweite Kammer unterteilt. In diesem Fall sind die Schalt-Anschlüsse HD1, HD2 jeweils mit einer dieser Kammern verbunden, so dass durch das Zuleiten von Hydraulikmedium in die eine Kammer und das Drainieren der anderen Kammer in einem Schaltzustand eine Verschiebung des Stellkolbens bzw. Ventilkörpers bewirkt wird. Durch die Bewegung des Stellkolbens bzw. Ventilkörpers des Betätigungsventils 12 werden Schalt-Anschlüsse des Betätigungsventils 12 geöffnet bzw. geschlossen, mit denen, im Falle einer hydraulischen Einrichtung zur Längenverstellung der Kolbenstange 8, die jeweils eine der Druckkammern befüllt und/oder drainiert werden kann.

Das in den Figuren 1 und 2 gezeigte System zur Verstellung von der Länge der Pleuelstange 7 eignet sich sowohl für Systeme, bei welchen die Längenverstellung passiv betrieben wird, das heißt bei welchen äußere Kräfte, die auf die Pleuelstange 7 wirken, zur Bewirkung der Längenverstellung eingesetzt werden, als auch für Systeme, bei welchen die Verstellung der Pleuelstangenlänge 7 aktiv erfolgt, das heißt bei welchen durch die Hydraulikeinrichtung 8 oder die Einrichtung zur Längenverstellung eine Kraft erzeugt wird, um den ersten Pleuelstangenabschnitt 7a und den zweiten Pleuelstangenabschnitt 7b gegeneinander zu verschieben.

Ein Schaltschema eines Schaltventils 9 aus Fig. 3 ist in **Fig. 5** gezeigt. Das Ventil mit dem Einlass 1 oder den Drainagen 2, 3 und den Schalt-Anschlüssen HD1, HD2 wird mittels der Rückstelleinrichtung 21, 22 in einer definierten Position gehalten und über Betätigungseinrichtungen, welche von der ersten Spule 13 und dem Ankerelement 15 und der zweiten Spule 14 und dem Ankerelement 15 jeweils gebildet werden, betätigt. Vorzugsweise weist das Schaltventil 9 zwei Schaltzustände auf und ist mithin bistabil. Alternativ dazu weist das Schaltventil 9 vorzugsweise drei Schaltzustände auf, wobei in diesem Fall vorzugsweise in einem Schaltzustand die Schalt-Anschlüsse HD1, HD2 weder drainiert noch mit dem Zufluss 11 verbunden sind und mithin eine neutrale Schaltstellung bildet.

Wie in den Figuren 1 und 2 angedeutet, werden die Drainagen 11 aus der Pleuelstange 7 herausgeführt, so dass das Öl in einen Ölsumpf einer Hubkolbenmaschine entweichen kann. Alternativ kann auch vorgesehen sein, dass das Öl über die Hydraulikmedium-Zuleitung 10 auch wieder aus den Druckräumen der Hydraulikeinrichtung 8 oder den Kammern des Betätigungsventils 12 entweichen kann. Insbesondere kann auch vorgesehen sein, dass das Schaltventil 9 nur einen einzigen Auslass 2 aufweist und die Schalt-Anschlüsse HD1, HD2 beide über diesen Auslass 2 drainiert werden.

In einer alternativen Ausführungsform, welche in **Fig. 4** gezeigt ist, weist das Schaltventil 9 nur einen einzigen Schalt-Anschluss HD1 und nur einen einzigen Auslass 2 auf. Diese Ausführung für ein Beispiel eines Schaltventils kommt insbesondere dann zum Einsatz, wenn die Hydraulikeinrichtung 8 oder das Betätigungsventil 12 nur einen Druckraum bzw. eine Kammer aufweisen und/oder ausschließlich mittels eines Druckraums bzw. einer Kammer betätigt werden.

Des Weiteren kann in Bezug auf alle Ausführungsbeispiele des Schaltventils 9 vorgesehen sein, dass beispielsweise der Einlass 1 in zwei Anschlüsse aufgeteilt ist. Selbiges gilt für die übrigen Anschlüsse, wie beispielswiese die Schaltanschlüsse HD1, HD2 und die Auslässe 2, 3.

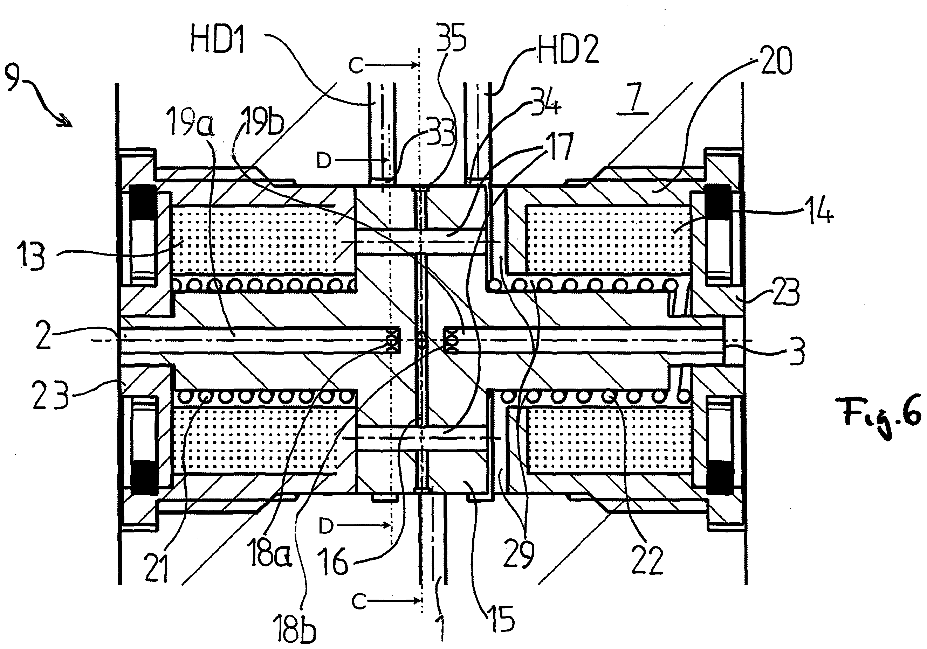

**Figur 6** zeigt ein erstes konkretes Ausführungsbeispiel eines elektromagnetisch betätigbaren Schaltventils 9 mit insgesamt fünf Anschlüssen gemäß der Figuren 3 und 5.

Ein Anker 15, welcher vorzugsweise magnetisierbares oder ferromagnetisches Material aufweist oder aus einem solchen besteht, hat im Wesentlichen den Querschnitt eines Kreuzes mit einem Mittelteil, welcher Radialbohrungen 16, 18 und Axialbohrungen 17, 19 aufweist, und sich nach links erstreckenden schmaleren Abschnitten, welche innerhalb zweier elektromagnetischer Spulen 13, 14 in einer Aufnahme 20 angeordnet sind. Die Angaben radial und axial beziehen sich in diesem Zusammenhang auf eine Mittelachse des Schaltelements 12. Die Aufnahme 20 umgibt vorzugsweise die Anordnung der Elemente des Schaltventils 9 im Bereich der Spulen 13, 14. Insbesondere deckt die Aufnahme 20 das Schaltventil 9 mit den Deckelelementen 23 nach links und rechts zur Pleuelstange 7 bzw., je nach Anordnung des Schaltventils 9, nach außerhalb der Pleuelstange 7 zum Innenraum der Hubkolbenmaschine ab. An diesen Deckelelementen 23 stützen sich jeweils eine erste Rückstelleinrichtung, in diesem Ausführungsbeispiel eine Feder und eine zweite Rückstelleinrichtung 22, im vorliegenden Fall ebenfalls eine Feder, vorzugsweise ab und halten den in axialer Richtung der Spulen 21, 22 verschiebbaren Anker 15 in einer durch die Federkraft und Kompression der Federn 21, 22 definierten Position.

Wird die erste Spule 13 aktiviert bzw. wird diese unter Spannung gesetzt und die zweite Spule 14 deaktiviert, so bildet sich zwischen der ersten Spule 13 und dem Anker 15 ein magnetisches Feld aus, welches bewirkt, dass der Anker 15 durch eine elektromagnetische Kraft nach rechts zu der ersten Spule 13 hin gezogen wird, wobei die elektromagnetische Kraft die Rückstellkraft der Feder 21 überwindet. Entsprechend bewegt sich der Anker 15 nach links in einen zweite Schaltstellung, wenn die zweite Spule 14 aktiviert und die erste Spule 13 deaktiviert wird.

Das Schaltventil 9 kann sowohl mit Wechselspannung (AC) als auch mit Gleichspannung (DC) geschaltet werden. Grundsätzlich wäre hierbei eine Gleichstromversorgung der ersten Spule 13 oder der zweiten Spule 14 vorteilhaft, weil eine dauerhafte Spannungsversorgung und damit elektromagnetische Kraftentfaltung gewährleistet wäre. Allerdings ist eine Versorgung der Pleuelstange 7 mit Wechselspannung einfacher zu realisieren. Hierbei schwingt das Ankerelement 15, welches in diesem ersten Ausführungsbeispiel von einem einzigen Anker gebildet wird, zwar leicht, weil die elektromagnetischen Kräfte nicht durchgängig vorhanden sind, sondern mit der Frequenz des Wechselstroms variieren. Aufgrund der Lagerung durch die erste Feder 21 und die zweite Feder 22 sowie, jedenfalls in diesem ersten Ausführungsbeispiel, die Dämpfung durch das in einem ersten Spalt 28 oder in einem zweiten Spalt 29 zwischen Anker 15 und der Aufnahme 20 befindliche Hydraulikmedium bleibt die gewünschte Schaltstellung während eines gesamten Zyklus des Wechselstroms jedoch im Wesentlichen erhalten.

Sind die Federn 21, 22 in der Weise eingestellt, dass die neutrale Position einer Mittellage des Ankers 15 in der Aufnahme 20 entspricht, so sind weder die Hydraulikmedium-Zuleitung noch die Hydraulikmedium-Drainage mit den Schalt-Anschlüssen HD1, HD2 verbunden. Dies entspricht einer neutralen Schaltstellung, in welcher keine unerwünschte Längenverstellung durch eine Betätigung der Hydraulikeinrichtung 8 auftreten kann.

Da die Wechselspannung vorzugsweise von einer Induktionsschleife zwischen der Pleuelstange 7 und dem Gehäuse der Hubkolbenmaschine erzeugt wird, hängt die Frequenz von der Drehzahl der Kurbelwelle, an welcher die Pleuelstange 7 mittels des Hauptlagers befestigt ist, ab. Bei höheren Drehzahlen der Kurbelwelle nimmt die Dauer der Phasen während eine Zyklus, während welchem keine Spannung anliegt, ab, so dass der Anker 15 aufgrund seiner Massenträgheit dauerhaft in der jeweiligen Schaltstellung verbleibt, auch wenn die elektromagnetischen Kräfte während eines Zyklus kurzzeitig aussetzen bzw. abgeschwächt sind.

Der Anker 15 weist radiale Zuleitungsbohrungen auf, welche mit axialen Zuleitungsbohrungen 17 fluidkommunizierend verbunden sind. Des Weiteren weist der Anker 15 radiale Drainagebohrungen auf, welche mit axialen Drainagebohrungen 19a, 19b fluidkommunizierend verbunden sind.

Die axiale Drainagebohrung 19a schließt mit dem ersten Auslass 2 ab, die axiale Drainagebohrung 19b mit dem zweiten Auslass 3. Je nach Schaltstellung des Ankers 15, rechte bzw. zweite oder linke bzw. erste, sind die radialen Drainagebohrungen 18 mit dem ersten Schalt-Anschluss HD1 verbunden oder die radialen Drainagebohrungen 18b mit dem zweiten Schalt-Anschluss HD2 fluidkommunizierend verbunden.

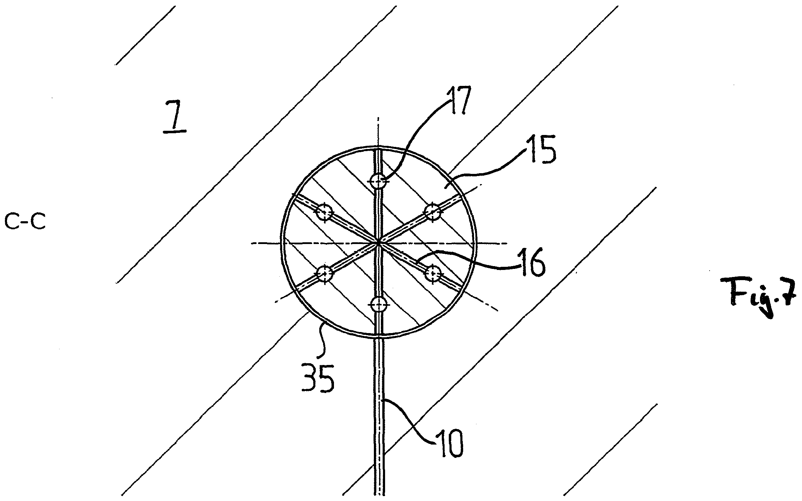

In der in den Figuren 6 und 7 gezeigten rechten bzw. zweiten Schaltstellung des Ankers 15 wird zwischen dem Anker 15 und der linken Seite der Aufnahme 20 ein zweiter Spalt 29 gebildet, welcher eine fluidkommunizierende Verbindung zwischen den axialen Zuleitungsbohrungen 17 und einer zweiten Umlaufnut 34 der Aufnahme 20, welche in diesem Bereich durch die Pleuelstange 7 gebildet wird, herstellt. In die zweite Umlaufnut 34 mündet wiederum der zweite Schalt-Anschluss HD2.

Entsprechend bildet sich in der ersten Schaltstellung des in Fig. 6 gezeigten ersten Ausführungsbeispiels ein erster Spalt 28 zwischen der ersten Spule 13 bzw. der Aufnahme 20 und dem Anker 15 aus (nicht gezeigt). In diesem Fall sind die axialen Zuleitungsbohrungen 17 über den ersten Spalt 28 und die erste Umlaufnute 33 mit dem ersten Schalt-Anschluss HD1 fluidkommunizierend verbunden.

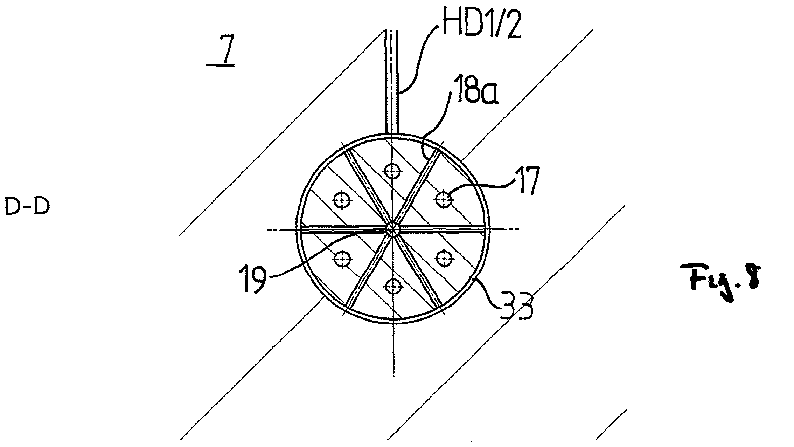

**Figur 7** zeigt einen Querschnitt entlang der Ebene C-C durch den Anker 15 gemäß Fig. 6. **Figur 8** zeigt einen Querschnitt des Ankerelements entlang der Schnittebene D-D in Fig. 6.

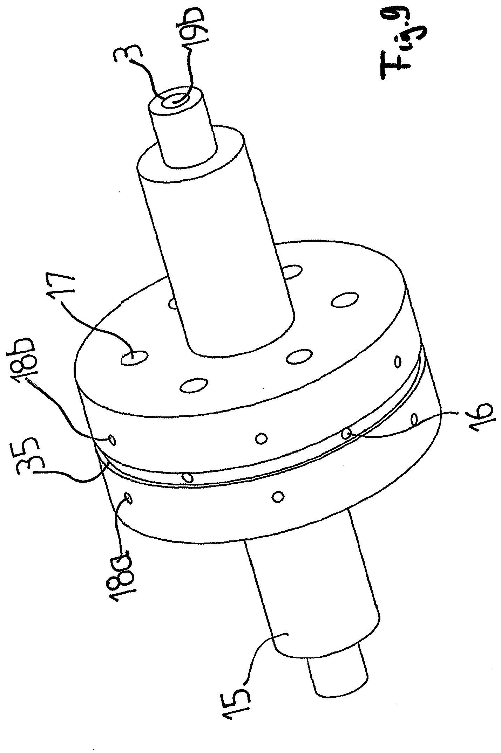

**Figur 9** zeigt das Ankerelement 15 gemäß Fig. 6 in perspektivischer Ansicht. Deutlich zu erkennen ist die Umlaufnut 35 des Ankers, welche die radialen Zuleitungsbohrungen 16 auf der Außenseite des Ankerelements 15 miteinander verbindet und gewährleistet, dass, unabhängig von der Winkelposition um die Achse des Ankerelements 15, stets eine fluidkommunizierende Verbindung zwischen radialen Zuleitungsbohrungen 16 und dem Einlass 1 gewährleistet werden kann, d.h. auch wenn keine der Zuleitungsbohrungen 16 mit dem Einlass 1 fluchtet.

Entsprechend gewährleisten die erste Umlaufnut 31 in der Aufnahme 20 und die zweite Umlaufnut 34 in der Aufnahme 20 eine fluidkommunizierende Verbindung zwischen den radialen Drainagebohrungen 18a, 18b und dem ersten Schalt-Anschluss HD1 bzw. dem zweiten Schalt-Anschluss HD2. Alternativ zu den Umlaufnuten 33, 34 der Aufnahme 20 könnten diese Umlaufnuten auch als zweite Umlaufnuten in dem Ankerelement 15 auf Höhe jeweils der radialen Drainagebohrung 18a und der radialen Drainagebohrung 18b vorgesehen sein.

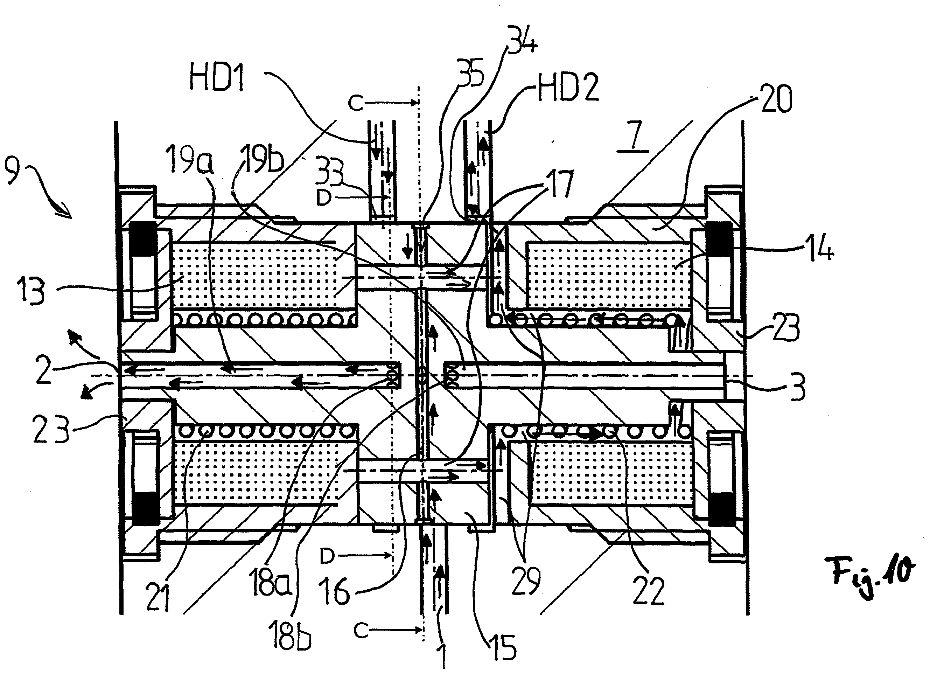

**Figur 10** zeigt die Fließrichtung des Hydraulikmediums im ersten Ausführungsbeispiel des Schaltventils 9 gemäß Fig. 6, wenn sich dieses im zweiten Schaltzustand befindet und ein zweiter Druckraum oder eine zweite Kammer aktiv oder passiv mit Hydraulikmedium befüllt wird und eine erste Kammer oder ein erster Druckraum aktiv oder passiv drainiert wird.

Das Hydraulikmedium fließt durch den Einlass 1 über die radialen Zuleitungsbohrungen 16 in die axialen Zuleitungsbohrungen 17 und von dort in den zweiten Spalt 29. Von dem zweiten Spalt 29 kann das Hydraulikmedium bzw. Öl nun in die zweite Umlaufnut 34 der Aufnahme 20 fließen und von dort über den zweiten Schalt-Anschluss 2 den zweiten Druckraum bzw. die zweite Kammer erreichen.

Flüssigkeit aus dem ersten Druckraum bzw. der ersten Kammer wird über eine Leitung zum ersten Schalt-Anschluss HD1 drainiert und erreicht die erste Umlaufnut 33 in der Aufnahme 20, welche in fluidkommunizierender Verbindung mit den radialen Drainagebohrungen 18a steht, so dass das Öl durch diese hindurch die axiale Drainagebohrung 19a erreicht und von dort das Schaltventil 9 bzw. die Pleuelstange 7 verlässt. Der Fluss des Öls ist jeweils durch Pfeile angedeutet.

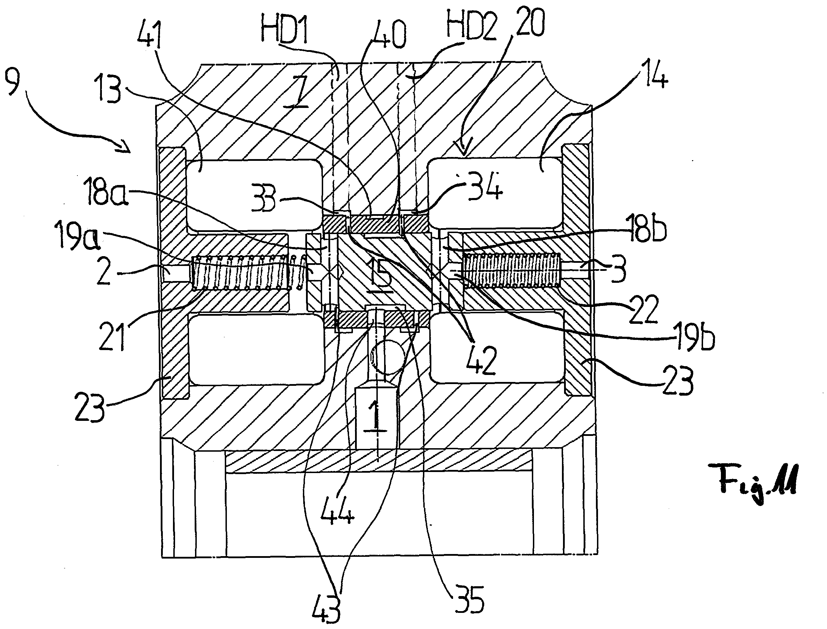

**Figur 11** zeigt ein zweites Ausführungsbeispiel des erfindungsgemäßen Schaltventils 9. Auch dieses Ausführungsbeispiel weist als Ankerelement vorzugsweise einen einzigen Anker auf. Auch dieser Anker 15 weist radiale Drainagebohrungen 18a, 18b und axiale Drainagebohrungen 19a, 19b auf. Auch bei diesem zweiten Ausführungsbeispiel wird eine neutrale Schaltstellung durch die Rückstellkraft von Federn 21, 22 bestimmt, und auch hier werden Schaltstellungen, welche eine Veränderung der Länge L der Pleuelstange 7 bewirken können, durch eine Induktion von elektromagnetischen Feldern in der ersten Spule 13 und in der zweiten Spule 14, welche jeweils mit dem Anker 15 als elektromagnetischer Aktor zusammenwirken, bewirkt.

Im Gegensatz zu dem ersten Ausführungsbeispiel der Fig. 6 erstreckt sich der Anker 15 in axialer Richtung jedoch nur über einen geringen Bereich, welcher insbesondere weniger als die axiale Erstreckung der Spulen 13, 14 ausmacht, im Inneren dieser Spulen, wenn dieser in neutraler Position ist. Dafür weisen die Deckelelemente 23 vorzugsweise Verlängerungen auf, welche sich im Inneren der Spulen 13, 14 zur Mitte des Schaltventils 9 hin erstrecken und weiter vorzugsweise eine axiale Bewegung des Ankers 15 begrenzen. Ein Großteil des magnetischen Flusses findet daher, wenn der Anker 15 in der ersten oder zweiten Schaltstellung ist, durch das Deckelelement 23 und nur ein kleiner Teil durch das Ankerelement 15 statt.

Im Gegensatz zu dem ersten Ausführungsbeispiel der Fig. 6 weist das zweite Ausführungsbeispiel des Weiteren vorzugsweise eine Hülse 40 auf, welche in der Aufnahme 20 in der Pleuelstange 7 aufgenommen ist und den Anker 15 axial verschiebbar lagert. Die Hülse weist eine Umlaufnut 41 auf, welche Einlasskanäle 44 mit der Umlaufnut 35 des Ankers 15 fluidkommunizierend verbindet. Des Weiteren weist die Hülse Zuleitungskanäle 42 auf, welche eingerichtet sind, um die Umlaufnut 35 des Ankers 15 mit den Umlaufnuten 33, 34 der Aufnahme 20 gemäß der jeweiligen Schaltstellung fluidkommunizierend zu verbinden. Schließlich dienen Drainagekanäle 43 der Hülse 40 dazu, die Umlaufnuten 33, 34 der Aufnahme 20, je nach Schaltstellung des Ankers 15, mit den radialen Drainagebohrungen 19a, 19b fluidkommunizierend zu verbinden.

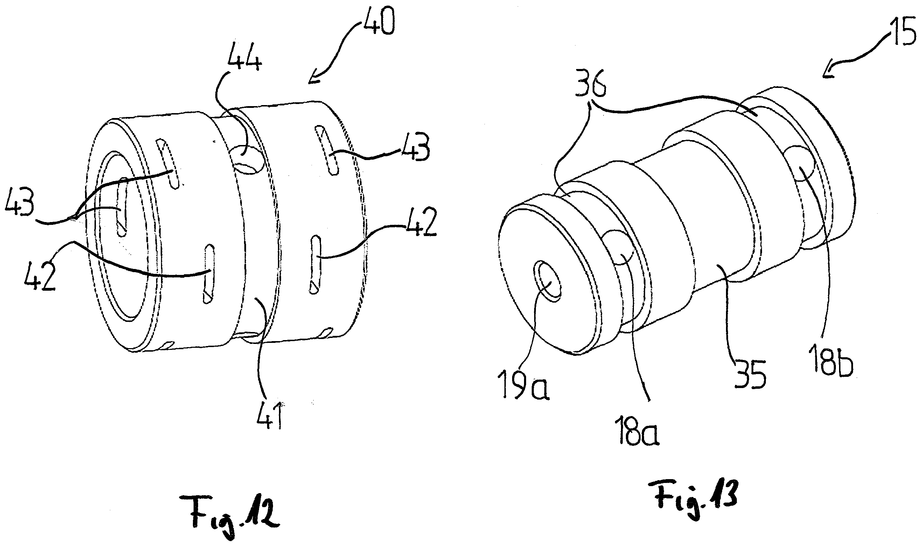

**Figur 12** zeigt eine perspektivische Ansicht einer Hülse 40 des zweiten Ausführungsbeispiels des Schaltelements 9 gemäß der Fig. 11.

**Figur 13** zeigt eine perspektivische Ansicht des Ankers 15 des zweiten Ausführungsbeispiels des Schaltelements 9 gemäß der Fig. 11. In dieser Ansicht des Ankers 15 ist ersichtlich, dass dieser zweite Umlaufnuten 36 aufweist, welche die radiale Drainagebohrung 18a und die radiale Drainagebohrung 18b fluidkommunizierend verbinden. Des Weiteren stellen diese Umlaufnuten sicher, dass, unabhängig von der Drehstellung des Ankers 15 in Bezug auf seine Achse, eine fluidkommunizierende Verbindung zwischen den radialen Drainagebohrungen 18a, 18b und dem jeweiligen Drainagekanal 43 der Hülse hergestellt werden kann.

In dem in Fig. 11 gezeigten zweiten Schaltzustand, in welchem ein zweiter Druckraum bzw. eine zweite Kammer, welche mit dem Schalt-Anschluss HD2 verbunden ist, befüllt werden kann und eine erste Kammer bzw. ein erster Druckraum, welcher mit dem Schalt-Anschluss HD1 verbunden ist, drainiert werden kann, steht der Einlass 1 in fluidkommunizierender Verbindung mit der ersten Umlaufnut 35 des ersten Ankers 15.

Auf der gegenüberliegenden Seite des Ankerelements 15 steht die erste Umlaufnut 35 in fluidkommunizierender Verbindung mit Zuleitungskanälen 42 der Hülse 40, welche wiederum in fluidkommunizierender Verbindung mit der zweiten Umlaufnut der Aufnahme 20 stehen. Diese ist wiederum in Verbindung mit dem zweiten Schalt-Anschluss HD2.

Der erste Schalt-Anschluss HD1 steht in fluidkommunizierender Verbindung mit der ersten Umlaufnut 33 der Aufnahme 20, welche wiederum über Drainagekanäle 43 mit der radialen Drainagebohrung 18a fluidkommunizierend verbunden ist. Die radiale Drainagebohrung 18a steht wiederum in fluidkommunizierender Verbindung mit der axialen Drainagebohrung 19a, welche in den ersten Auslass 2 mündet.

Entsprechend wäre in der ersten, nicht dargestellten Schaltstellung des Ankers 15 der Einlass 1 über eine Umlaufnut 41 der Hülse und die Einlasskanäle 44 mit der ersten Umlaufnut 35 der Hülse 15 fluidkommunizierend verbunden. Die erste Umlaufnut 35 wäre wiederum über die Zuleitungskanäle 42 der Hülse und über die erste Umlaufnut 33 der Aufnahme 20 mit dem ersten Schalt-Anschluss HD1 fluidkommunizierend verbunden. Umgekehrt wäre in diesem Schaltzustand der zweite Schalt-Anschluss HD2 über die zweite Umlaufnut 34, die Drainagekanäle 43, die zweite Umlaufnut des Ankerelements 36, die radialen Drainagebohrungen 18b und die axiale Drainagebohrung 19b mit dem zweiten Auslass 3 fluidkommunizierend verbunden.

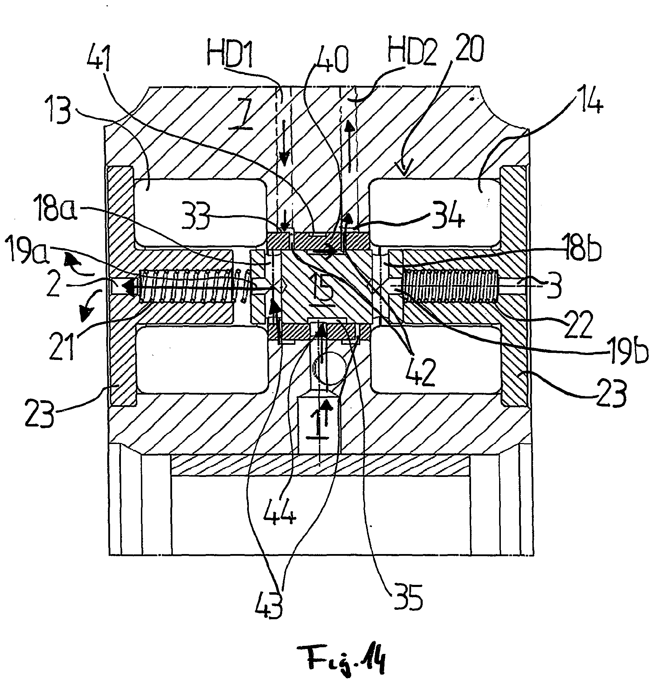

**Figur 14** deutet den Fluss eines Hydraulikmediums in der zweiten Schaltstellung des Schaltelements 9 gemäß dem zweiten Ausführungsbeispiel durch Pfeile an. Vom Einlass 1 angesaugtes oder eingepresstes Hydraulikmedium fließt über die Umlaufnut 41 der Hülse 40 und die Einlasskanäle 44 der Hülse 40 in die erste Umlaufnut 35 des Ankers 15 und von dort auf die andere Seite des Ankers 15, wo das Hydraulikmedium die erste Umlaufnut 35 über Zuleitungskanäle der Hülse verlässt und in die zweite Umlaufnut 34 der Aufnahme 20 strömt. Von dort fließt das Hydraulikmedium über den zweiten Schalt-Anschluss HD2 zu dem zweiten Druckraum bzw. der zweiten Kammer.

Hydraulikmedium bzw. Öl, welches aus dem ersten Druckraum bzw. der ersten Kammer in den ersten Schalt-Anschluss HD1 gepresst wird, fließt zu der ersten Umlaufnut 33 der Aufnahme 20 und von dort in den Einlasskanal 44 der Hülse und in eine zweite Umlaufnut 36 des Ankerelements 15. Von dieser Umlaufnut 36 gelangt das Hydraulikmedium über die radiale Drainagebohrung 18a in die axiale Drainagebohrung 19a und verlässt von dort das Schaltventil 9 bzw. die Pleuelstange 7 über den ersten Auslass 2.

Ein Vorteil des zweiten Ausführungsbeispiels gegenüber dem ersten Ausführungsbeispiel ist insbesondere, dass in dem Ankerelement auf radiale Zuleitungsbohrungen und axiale Zuleitungsbohrungen verzichtet werden kann. Des Weiteren kann der Anker 15 kleiner und damit leichter ausgebildet werden. Hierdurch reduzieren sich die Reibungen zwischen dem Anker 15 und seiner Lagerung, welche bei hohen Drehzahlen durch die großen auftretenden Beschleunigungen und Fliehkräfte im schlechtesten Fall zu einer Blockierung, wenigstens jedoch zu einer Behinderung der Bewegung des Ankers 15 führen können.

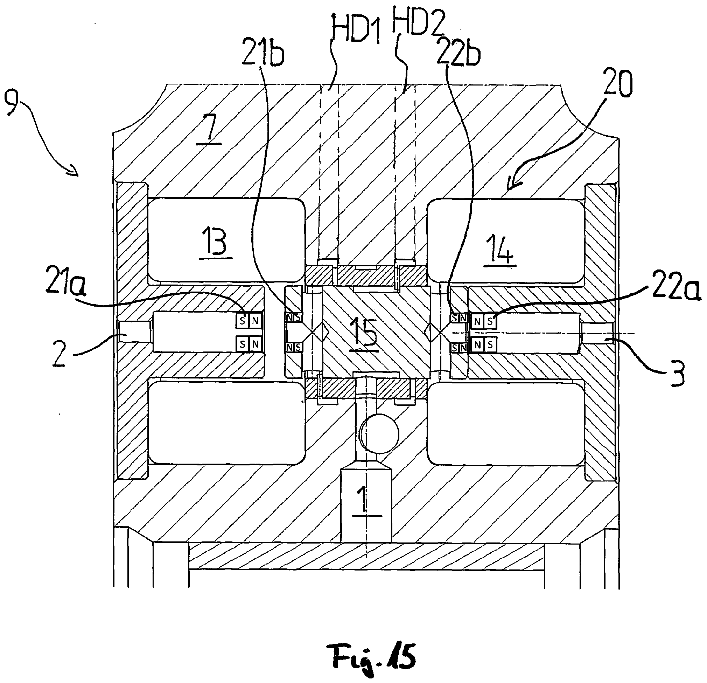

**Figur 15** stellt eine abgewandelte Ausgestaltung des zweiten Ausführungsbeispiels des Schaltventils 9 dar.

Diese Abwandlung unterscheidet sich von der Ausgestaltung in Fig. 11 im Wesentlichen dadurch, dass als Rückstelleinrichtungen 21 und 22 Paare von Permanentmagneten zum Einsatz kommen. So wird beispielsweise der Permanentmagnet 21b einer ersten Rückstelleinrichtung von dem Permanentmagneten 21a abgestoßen, da diese mit entgegengesetzter Polarisation angeordnet sind. Gleiches gilt für den Permanentmagneten 22b in Bezug auf den Permanentmagneten 22a, welche ebenfalls mit entgegengesetzter Polarisation angeordnet sind. Die Permanentmagneten 21a und 22a sind hierbei, wie zuvor die Federn 21, 22, an den Deckelelementen 23 gelagert. Durch die Rückstellkräfte wird das Ankerelement 15 vorzugsweise in einer neutralen Position gehalten, wenn die Spulen 13, 14 beide nicht aktiviert sind. In dieser neutralen Stellung werden, wie bei den vorherigen Ausführungsbeispielen, sowohl Zufluss als auch Abfluss zu bzw. von den Schalt-Anschlüssen HD1, HD2 gesperrt bzw. blockiert.

Wird die erste Spule 13 bestromt, bewegt sich das Ankerelement nach links, da die Anziehungswirkung der ersten Spule 13 die Abstoßung der Magnetpaare 21a, 21b überwiegt. Wird die zweite Spule 14 bestromt, bewegt sich das Ankerelement 15 nach rechts, da die Anziehungswirkung der zweiten Spule 14 die Abstoßung der Magnetpaare 22a, 22b überwiegt.

Der Fluss von Hydraulikmedium durch das in Fig. 15 dargestellte Schaltventil ist in der ersten und zweiten Schaltstellung wenigstens im Wesentlichen identisch zu jener der Ausgestaltung nach Fig. 11.

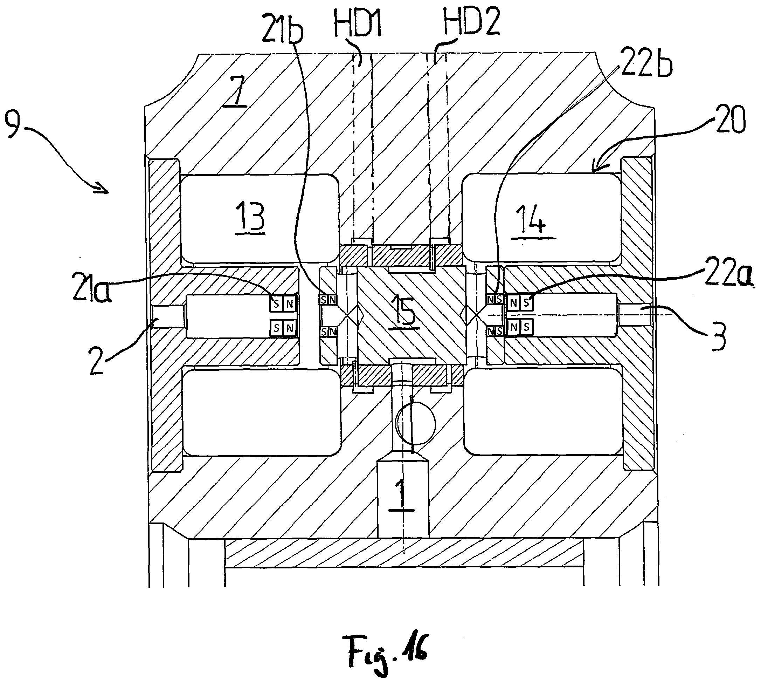

**Figur 16** stellt eine weitere alternative Ausgestaltung des zweiten Ausführungsbeispiels der Fig. 11 dar. Wiederum sind die Rückstelleinrichtungen 21, 22 als Magnetpaare 21a, 21b bzw. 22a, 22b ausgeführt. Im Gegensatz zu der vorherigen alternativen Ausgestaltung sind die Permanentmagneten der Magnetpaare 21a, 21b bzw. 22a, 22b jedoch nunmehr mit gleichgerichteter Polarisation ausgerichtet, so dass diese aufeinander anziehend wirken.

Wird in diesem Fall die erste Spule 13 bestromt, bewegt sich der Anker 15 nach links, da die Anziehungswirkung der ersten Spule 13 durch die Magnetpaare 21a, 21b auf der linken Seite unterstützt wird. Wird die zweite Spule 14 bestromt, bewegt sich der Anker 15 nach rechts, da die Anziehungswirkung der zweiten Spule 14 durch die rechten Magnetpaare 22a, 22b unterstützt wird.

Wird keine der beiden Spulen 13, 14 bestromt, so verbleibt das Ankerelement 15 in der zuletzt eingenommenen Position. Daher gibt es keine Mittelstellung. Die Ausgestaltung der Fig. 16 ist mithin als bistabil zu bezeichnen, da es nur zwei Gleichgewichtszustände des Ankers 15 gibt. Der Fluss eines Hydraulikmediums durch diese Ausgestaltung des Schaltventils 9 ist wenigstens im Wesentlichen identisch zu jener der Figuren 11 und 15.

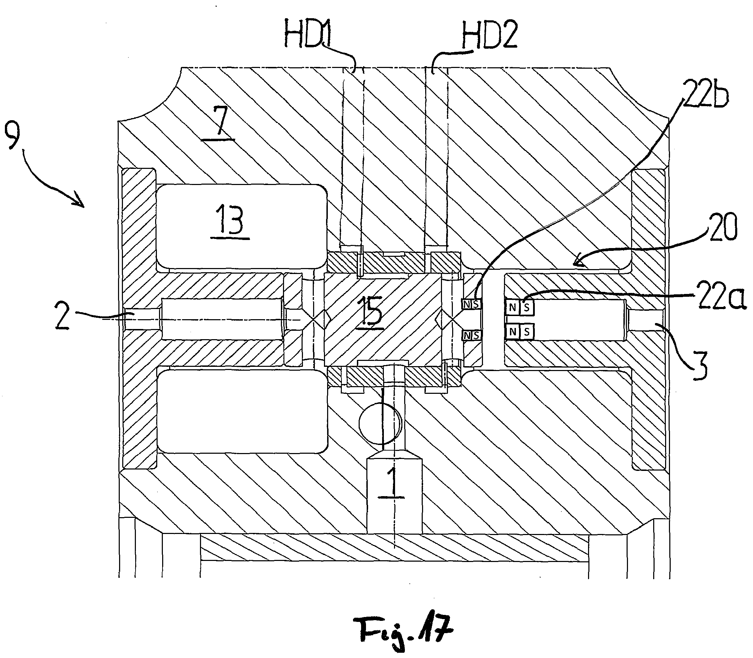

**Figur 17** betrifft ein drittes Ausführungsbeispiel des erfindungsgemäßen Schaltventils 9.

Dieses Ausführungsbeispiel weist nur eine einzige Spule 13 und eine einzige Rückstelleinrichtung 22 auf. In der gezeigten Ausgestaltung wird die Rückstelleinrichtung durch Paare von Permanentmagneten 22a, 22b gebildet, welche mit gleicher Polarisation, das heißt einander anziehend, angeordnet sind.

Wird die Spule 13 bestromt, bewegt sich der Anker 15 nach links, da die Anziehungswirkung der Spule 13 größer ist als die Anziehungskraft der Magnetpaare 22a, 22b rechts. Wird die Spule 13 nicht bestromt, so geht der Anker 15 aufgrund der Anziehungskraft der Magnetpaare 22a, 22b in die rechte Position. Auch bei diesem Ausführungsbeispiel gibt es keine Mittelstellung, so dass es sich auch hier um ein bistabiles Schaltventil 9 handelt.

Der Fluss eines Hydraulikmediums durch das Schaltventil 9 entspricht dabei wenigstens im Wesentlichen jenem der Ausgestaltung des zweiten Ausführungsbeispiels.

Die Magnetpaare 22a, 22b können alternativ auch auf der linken Seite des Schaltventils 9 angeordnet sein, wobei diese dann mit entgegengesetzter Polarisation angeordnet sein müssen, so dass diese sich abstoßen.

Das dritte Ausführungsbeispiel zeichnet sich insbesondere dadurch aus, dass auf eine Spule und eine Rückstelleinrichtung verzichtet werden kann, was das Schaltventil 9 leichter und einfacher im Aufbau macht.

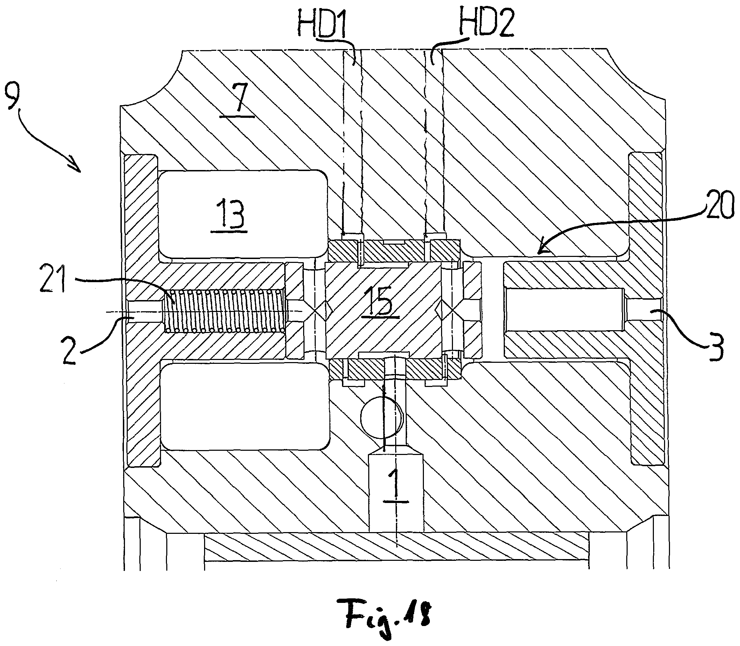

**Figur 18** zeigt eine alternative Ausgestaltung des dritten Ausführungsbeispiels des erfindungsgemäßen Schaltventils 9 gemäß der Fig. 17.

Anstatt der Magnetpaare als Rückstelleinrichtung ist nunmehr eine Feder 21 vorgesehen, welche eine Rückstellkraft zwischen dem Deckelelement 23 und dem Ankerelement 15 bewirkt.

Wird die Spule 13 bestromt, bewegt sich das Ankerelement 15 entgegen der Federkraft der Feder 21 nach links. Wird die Spule 13 nicht bestromt, so bewegt sich der Anker 15 aufgrund der Federkraft nach rechts.

Auch bei dieser alternativen Ausgestaltung gibt es keine neutrale Position, so dass es sich auch hier um ein bistabiles Schaltventil 9 handelt.

Alternativ könnte die Feder 21 auch durch eine Feder 22 auf der linken Seite des Schaltventils 9 ersetzt werden, welche zwischen dem Deckelelement 23 und dem Anker 15 auf der linken Seite anziehend wirkt. In diesem Fall würde, wenn die Spule 13 aktiviert wird, der Anker 15 gegen die Federkraft der bereits gespannten Feder 22 nach links gezogen werden.

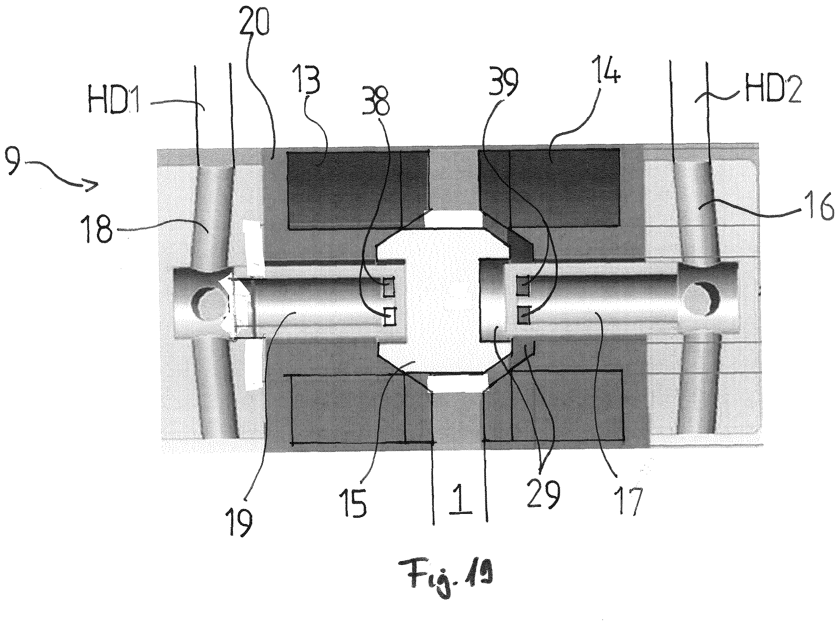

**Figur 19** zeigt ein viertes Ausführungsbeispiel eines erfindungsgemäßen Schaltelements 9. Auch in diesem Ausführungsbeispiel ist das Ankerelement 15 ein einziger Anker, welcher durch Spulen 13, 14 mittels elektromagnetischer Kräfte in eine erste Schaltstellung (Anker rechts) und eine zweite Schaltstellung (Anker links) bewegt werden kann.

Bei diesem Ausführungsbeispiel kommen keine Rückstelleinrichtungen zum Einsatz. In der dargestellten zweiten Schaltstellung steht der Einlass 1 über dem zweiten Spalt 29 und dem zweiten Durchlass mit der axialen Zuleitungsbohrung 17 und damit auch mit der radialen Zuleitungsbohrung 16 in fluidkommunizierender Verbindung, so dass der Einlass 1 mit dem zweiten Schalt-Anschluss HD2 fluidkommunizierend verbunden ist.

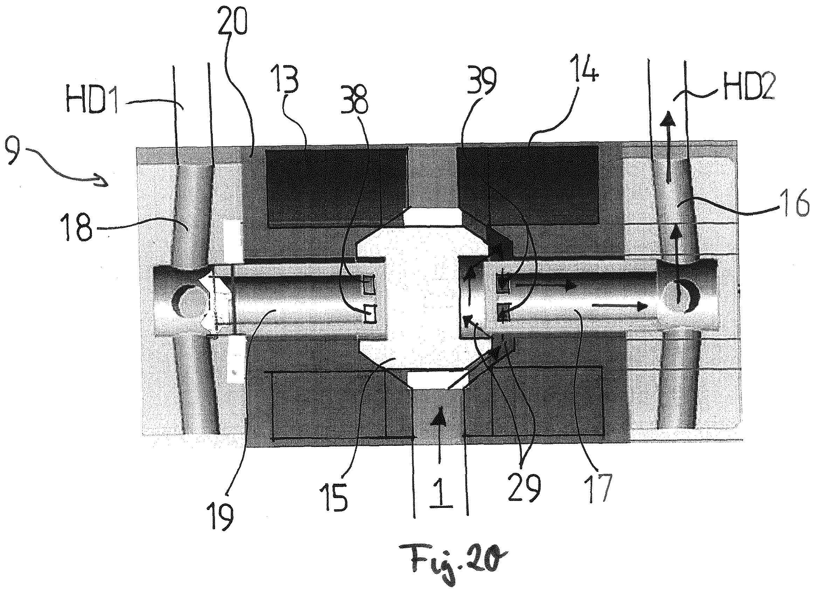

In **Figur 20** ist der Fluss eines Hydraulikmediums bzw. Öls durch das Schaltventil 9 gemäß dem vierten Ausführungsbeispiel dargestellt. Dieses fließt durch den Einlass 1 und den zweiten Spalt 29 in den zweiten Durchlass 39 und von dort durch die axiale Zuleitungsbohrung 17 in die radiale Zuleitungsbohrung 16, wo das Hydraulikmedium das Schaltventil durch den zweiten Schaltanschluss HD2 verlässt. In der ersten Schaltstellung würde das Hydraulikmedium entsprechend vom Einlass durch einen ersten Spalt 28 (nicht gezeigt) in die Öffnungen der ersten Durchlässe 38 strömen und von dort in die axiale Zuleitungsbohrung 17 und über die radiale Zuleitungsbohrung 16 zu dem ersten Schalt-Anschluss HD1, wo das Öl das Schaltventil 9 verlassen würde.

Die Drainage einer Hydraulikeinrichtung 8 oder eines Betätigungsventils 12 erfolgt im vierten Ausführungsbeispiel vorzugsweise getrennt von dem Schaltventil 9.

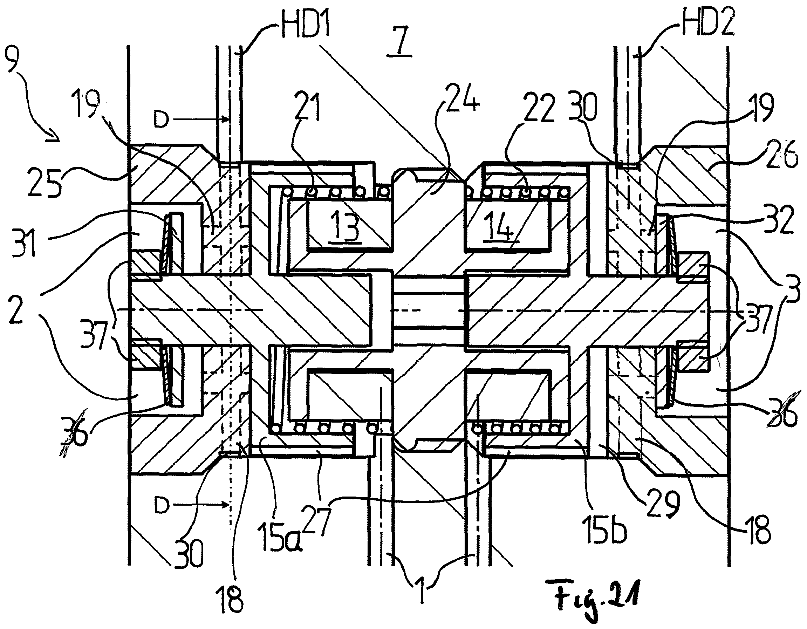

**Figur 21** zeigt ein fünftes Ausführungsbeispiel eines erfindungsgemäßen Schaltventils 9.

Das Ankerelement 15 dieses Ausführungsbeispiels besteht aus zwei Ankern, einem ersten Anker 15a und einem zweiten Anker 15b. Diese Anker 15, 15b erstrecken sich in axialer Richtung des Schaltventils 9 und umfassen mit zylinderförmigen Fortsätzen die erste Spule 13 und die zweite Spule 14.

Zwischen dem zylinderförmigen Fortsatz des ersten Ankers 15a und der ersten Spule 13 ist als Rückstelleinrichtung 21 eine erste Feder angeordnet, zwischen dem zylinderförmigen Fortsatz des zweiten Ankers 15b und der zweiten Spule 14 ist als zweite Rückstelleinrichtung 22 eine zweite Feder angeordnet. Die Federn stützen die Anker 15a, 15b jeweils gegenüber einem Mittelteil 24 der Aufnahme ab. Der Anker 15a wird von dem Mittelteil 24 und einem ersten Verschlusselement 25 geführt, der zweite Anker 15b von dem Mittelteil 24 und einem zweiten Verschlusselement 26.

Die Federn 21, 22, welche gegen die zylinderförmigen Fortsätze der Anker 15a, 15b vorgespannt sind, halten den jeweiligen Anker 15a, 15b in einer definierten Position, insbesondere einer neutralen Position. Die Verschlusselemente 25, 26 begrenzen die Bewegung der Anker 15a, 15b nach außen und lagern bzw. führen die Anker zusammen mit dem Mittelteil 24.

Die Verschlusselemente weisen radiale Drainagebohrungen 18 und axiale Drainagebohrungen 19 auf, welche jeweils mit dem ersten Anschluss HD1 und dem zweiten Anschluss HD2 fluidkommunizierend verbunden sind. Die axialen Drainagebohrungen sind sowohl mit den Auslässen 2, 3 fluidkommunizierend verbindbar, wie auch, in der jeweils anderen Schaltstellung der Anker 15a, 15b mit Spalten 28, 29, welche über Hohlräume 27 in den Ankern 15a, 15b mit den Einlässen 1 fluidkommunizierend verbindbar sind. Auf diese Weise können die Drainagebohrungen auch als Zuleitung zu den Schalt-Anschlüssen HD1 und HD2 genutzt werden.

Wird die erste Spule 13 bestromt, zieht sie den ersten Anker 15a an sich und wird die zweite Spule 14 bestromt, zieht diese den zweiten Anker 15b an sich.

Wird nicht bestromt, sind beide Spulen 13, 14 inaktiv und die Federn 21, 22 drücken beide Anker 15a, 15b gegen die Öffnung der axialen Drainage 19. Auf diese Weise ist weder ein Zuleiten noch ein Drainieren der Schalt-Anschlüsse HD1, HD2 möglich, so dass die eine Länge des Pleuels konstant gehalten wird. Dies entspricht einer neutralen Schaltstellung.

In **Figur 21** befindet sich der erste Anker 15a in der Drainageschaltstellung, d.h. die Hydraulikflüssigkeit kann über die axiale Drainagebohrung 19 und den ersten Auslass 2 entweichen. Der zweite Anker 15b befindet sich in einer Zuführschaltstellung, so dass der rechte Einlass 1 über den Hohlraum 27 und den Spalt 29 sowie die radiale Drainagebohrung 18 mit dem zweiten Schalt-Anschluss HD2 fluidkommunizierend verbunden ist. Die axialen Drainagebohrungen 19 sind auf dieser rechten Seite durch das zweite Deckelelement 32, welches durch einen Federteller 45 gehalten wird, verschlossen.

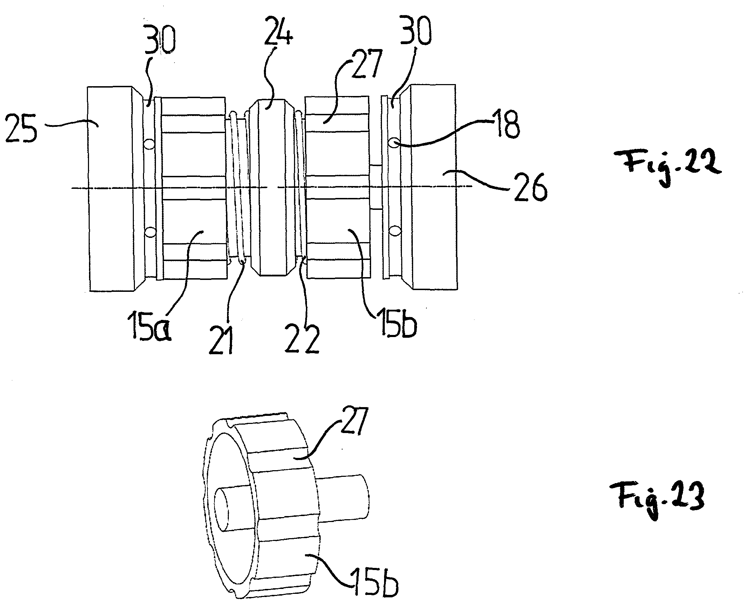

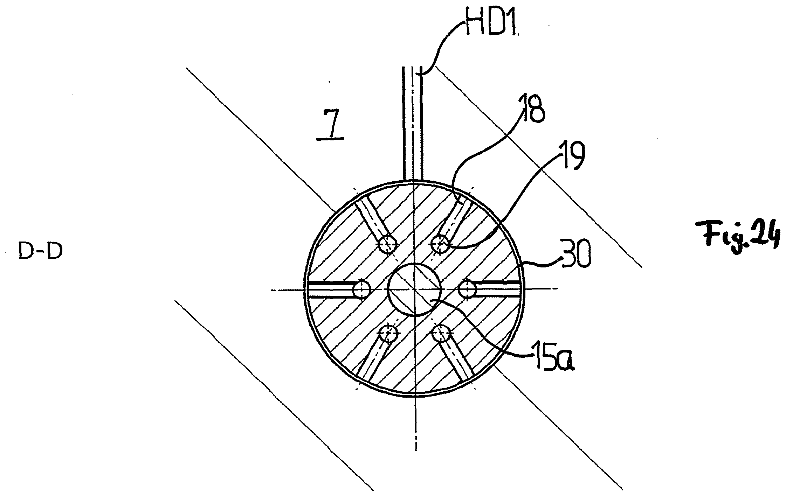

**Figur 22** zeigt eine Seitenansicht der Elemente des Schaltventils 9 gemäß Fig. 21 ohne Aufnahme 20. **Figur 23** zeigt eine perspektivische Draufsicht des Ankers 15b. Deutlich zu erkennen ist der zylinderförmige Fortsatz, in welchen die Hohlräume 27 eingebracht sind. **Figur 24** zeigt einen Schnitt durch das Schaltelement 9 entlang der Schnittebene D-D.

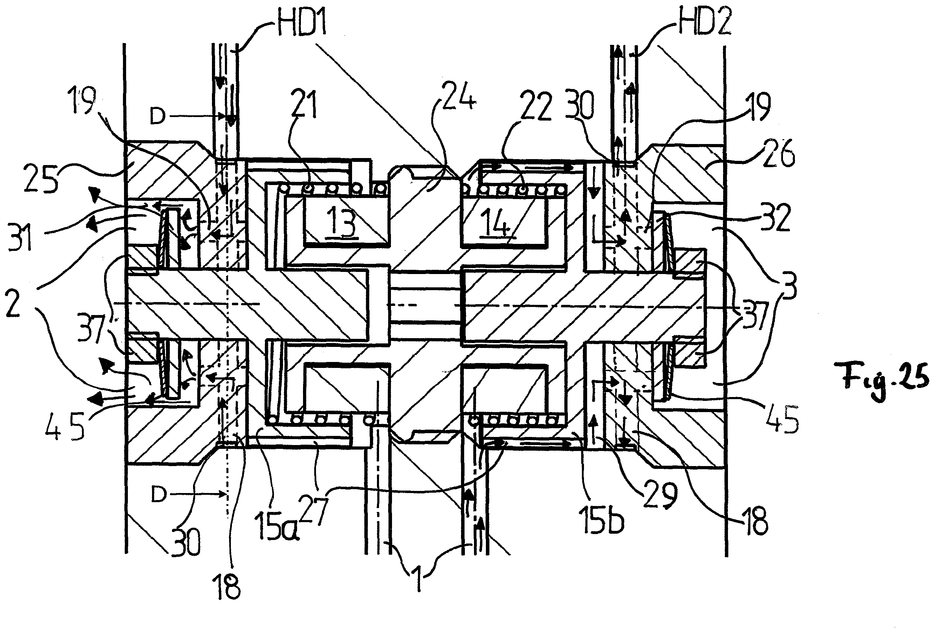

**Figur 25** zeigt nochmals eine Ansicht gemäß der Fig. 21 des fünften Ausführungsbeispiels, wobei der Fluss von Hydraulikmedium durch Pfeile angedeutet ist. In der gezeigten Schaltstellung des ersten Ankers 15a und des zweiten Ankers 15b kann über den Einlass 1 Hydraulikmedium durch den Hohlraum 27 und den zweiten Spalt 29 in die axialen Bohrungen 19 dringen und von hier aus über die radialen Bohrungen 18 sowie eine Umlaufnut 30 des Verschlusselements 31 in den zweiten Schalt-Anschluss HD2 gelangen. Dagegen kann Hydraulikmedium von dem ersten Schalt-Anschluss HD1 über die radialen Bohrungen 18 des ersten Verschlusselements 25 und dessen axiale Bohrung 19 aus dem zweiten Auslass 2, wie durch die Pfeile angedeutet, austreten.

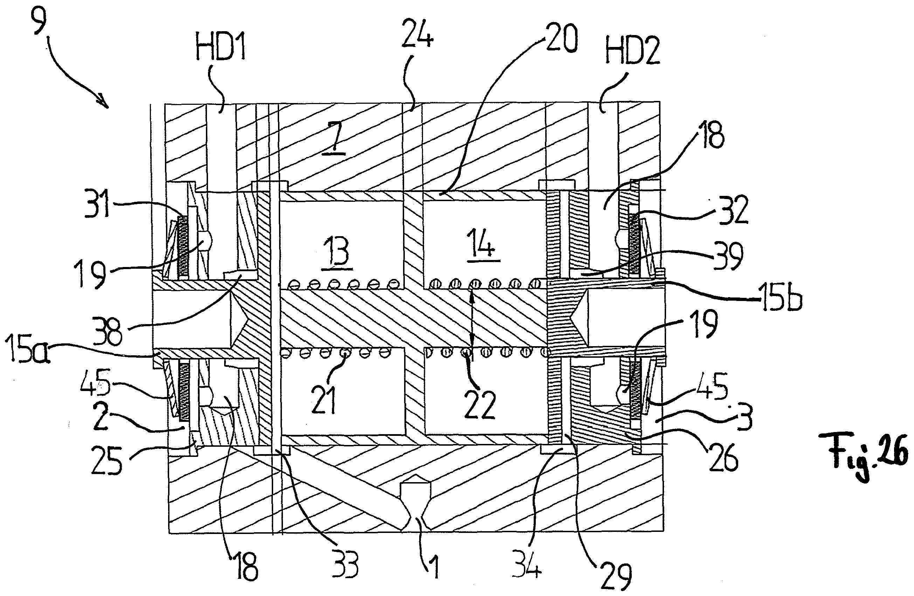

**Figur 26** zeigt ein sechstes Ausführungsbeispiel des erfindungsgemäßen Schaltelements 9. Auch in diesem Ausführungsbeispiel besteht, wie im fünften Ausführungsbeispiel der Figuren 21 und 25, das Ankerelement 15 aus zwei Ankern 15a, 15b, welche jeweils zwischen zwei Schaltstellungen verschiebbar sind.

Wird die erste Spule 13 aktiviert, so überwindet das erste Ankerelement 15a die Rückstellkraft der Feder 21 und wird zu der ersten Spule 13 hingezogen. Hierdurch entsteht ein erster Spalt 28 (nicht gezeigt) und der erste Auslass 2 ist verschlossen. Wird die zweite Spule 14 aktiviert, steht der zweite Spalt 29 offen und der zweite Auslass 3 wird verschlossen.

Auch in diesem Ausführungsbeispiel weisen die Verschlusselemente 25, 26 radiale Bohrungen 18 und axiale Bohrungen19 auf. Die Deckelelemente 31, 32 wirken, wie im fünften Ausführungsbeispiel, mit den Ankern 15a, 15b über Federteller 45 und Sicherungselemente 37 zusammen, so dass die Deckelelemente 31, 32 bei einer Bewegung der Anker 15a, 15b mitbewegt werden.

In einer Zuführschaltstellung für den ersten Schalt-Anschluss HD1 ist die erste Spule 13 aktiviert, so dass sich zwischen dem Anker 15a und dem ersten Anschlusselement 25 ein Spalt 28 (nicht gezeigt) ausbildet, und gleichzeitig werden die axialen Drainagebogen 19 in dem ersten Verschlusselement 25 durch das erste Deckelelement verschlossen. Nun steht der erste Schalt-Anschluss HD1 mit dem Einlass 1 über die erste Umlaufnut 33 in der Aufnahme 20 über den ersten Spalt 28, erste Durchlässe 38 sowie die radiale Drainagebohrung 18 in fluidkommunizierender Verbindung. Umgedreht geht der erste Schalt-Anschluss HD1 in der in Fig. 26 gezeigten Drainage-Schaltstellung des ersten Ankers 15a über die radiale Drainagebohrung 18 und die axialen Drainagebohrungen 19 in fluidkommunizierender Verbindung mit dem ersten Auslass 2, da die axialen Bohrungen 19 nicht durch das erste Deckelelement verschlossen werden. Entsprechende Schaltstellungen existieren auch für den zweiten Anker 15b.

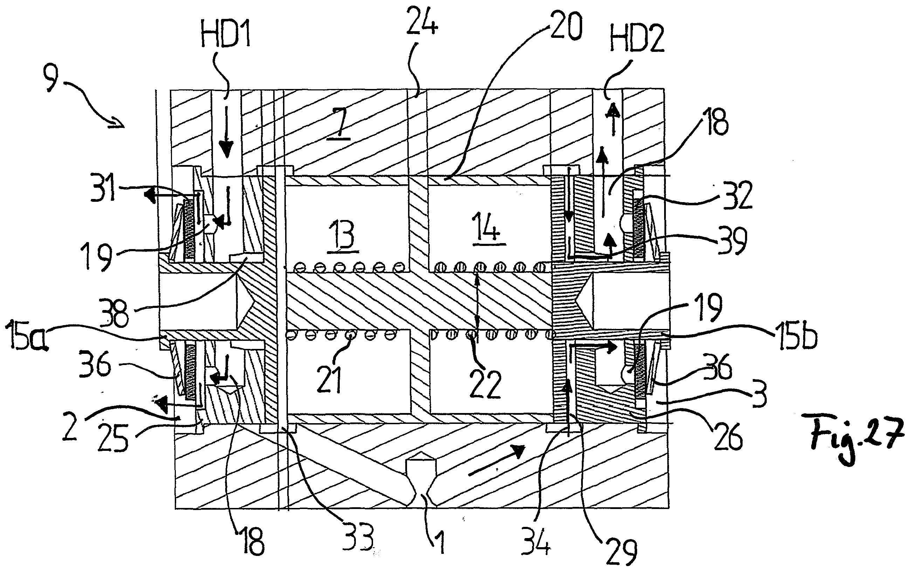

**Fig. 27** deutet den Fluss des Hydraulikmediums in Schaltventilen 9 im Schaltzustand gemäß Fig. 26 des sechsten Ausführungsbeispiels durch Pfeile an.

Das Hydraulikmedium kann über den Einlass 1 sowie eine zweite Umlaufnut 34 der Aufnahme 20 in den zweiten Spalt 29 gelangen und von dort über die zweiten Durchlässe 39 in die radiale Bohrung 18, von wo das Hydraulikmedium zu dem zweiten Schalt-Anschluss HD2 fließen kann. Auf der anderen Seite kann Hydraulikmedium von dem ersten Schaltanschluss HD1 durch die radiale Drainagebohrung 18 in die axialen Drainagebohrungen 19 gelangen und von dort aus dem ersten Auslass 2 treten.

Weitere Ausgestaltungen der längenverstellbaren Pleuelstange sind im Folgenden beschrieben:
Längenverstellbare Pleuelstange, wobei die Pleuelstange (7) einen ersten Pleuelstangenabschnitt (7a) und einen zweiten Pleuelstangenabschnitt (7b) aufweist, wobei die beiden Pleuelstangenabschnitte (7a, 7b) zum Verstellen einer Pleuelstangenlänge (L), insbesondere entlang einer Längsachse der Pleuelstange (7), relativ zueinander verschiebbar sind, wobei die Hydraulikeinrichtung (8) einen ersten Hydraulikzylinder mit einem ersten Druckraum und einem zweiten Druckraum aufweist, welche durch einen Kolben getrennt sind, wobei einer der beiden Pleuelstangenabschnitte (7a) mit dem Hydraulikzylinder und der andere der beiden Pleuelstangenabschnitte (7b) mit dem Kolben verbunden ist, und wobei die Pleuelstange (7) eine Hydraulikmedium-Zuleitung (10) und/oder eine Drainage (11) aufweist, welche mit dem ersten Druckraum und/oder dem zweiten Druckraum fluidkommunizierend verbindbar sind.

Längenverstellbare Pleuelstange (7), wobei die Pleuelstange (7) einen ersten Pleuelstangenabschnitt (7a) mit einem Mutterabschnitt und einen zweiten Pleuelstangenabschnitt (7b) mit einem Spindelelementabschnitt aufweist, wobei der Mutterabschnitt und der Spindelelementabschnitt ineinander greifen und zum Verstellen einer Pleuelstangenlänge, insbesondere entlang einer Längsachse der Pleuelstange (7), relativ zueinander drehbar sind, wobei die Hydraulikeinrichtung (8) eingerichtet ist, eine relative Drehung des Mutterabschnitts und des Spindelelementabschnitts zu bewirken, und wobei die Pleuelstange (7) eine Hydraulikmedium-Zuleitung (10) und/oder eine Drainage (11) aufweist, welche mit der Hydraulikeinrichtung fluidkommunizierend verbindbar sind.

Längenverstellbare Pleuelstange (7), wobei die Hydraulikvorrichtung (8) des Weiteren ein Betätigungsventil (12), insbesondere ein Schieberventil oder Drehschieberventil, aufweist, wobei das Schaltventil (9) zur hydraulischen Betätigung des Betätigungsventils (12) ausgebildet ist und das Betätigungsventil (12) zum Öffnen bzw. Verschließen von fluidkommunizierenden Verbindungen der beiden Druckräume mit der Hydraulikmedium-Zuleitung (10) und/oder der Drainage (11) oder zum Erzeugen einer relativen Drehung zwischen dem Mutterabschnitt und dem Spindelabschnitt ausgebildet ist.

Längenverstellbare Pleuelstange, wobei das Betätigungsventil einen zweiten Hydraulikzylinder mit einer ersten Kammer und einer zweiten Kammer aufweist, welche durch einen Stellkolben getrennt sind, wobei der Stellkolben eingerichtet ist, wenigstens ein Schließventil, insbesondere ein Kugelventil zu betätigen oder mit dem Mutterabschnitt oder dem Spindelabschnitt drehfest verbunden ist.

Längenverstellbare Pleuelstange (7), wobei das Schaltventil (9), insbesondere ein 4/3 Wegeventil, aufweist: einen Einlass (1), einen ersten Auslass (2), einen zweiten Auslass (3), einen ersten Schalt-Anschluss (HD1), welcher in einem ersten Schaltzustand des Schaltventils (9) mit dem Einlass (1) oder in einem zweiten Schaltzustand des Schaltventils (9) mit dem ersten Auslass (2) fluidkommunizierend verbunden ist, und einen zweiten Schalt-Anschluss (HD2), welcher in einem zweiten Schaltzustand des Schaltventils (9) mit dem Einlass (1) oder in einem ersten Schaltzustand des Schaltventils (9) mit dem zweiten Auslass (3) fluidkommunizierend verbunden ist, wobei das Schaltventil (9) mit der Hydraulikeinrichtung (8) über den ersten Schalt-Anschluss (HD1) und den zweiten Schalt-Anschluss (HD2) fluidkommunizierend verbunden ist.

Längenverstellbare Pleuelstange (7), wobei der erste Druckraum oder die erste Kammer mit dem ersten Schalt-Anschluss (HD1) und der zweite Druckraum oder die zweite Kammer mit dem zweiten Schaltanschluss (HD2) fluidkommunizierend verbunden sind.

Längenverstellbare Pleuelstange (7), welche zwei Verschlusselemente (25, 26) aufweist, wobei ein erstes Verschlusselement (25) in Bezug auf den ersten Anker (15a) gegenüber eines Mittelteils (24) der Aufnahme (20) angeordnet ist und wobei ein zweites Verschlusselement (26) in Bezug auf den zweiten Anker (15b) gegenüber des Mittelteils (24) angeordnet ist.

Längenverstellbare Pleuelstange (7), wobei das erste Verschlusselement (25) radiale (18) und axiale Bohrungen (19) aufweist, welche miteinander verbunden sind und im ersten Schaltzustand den Einlass (1) und den ersten Schalt-Anschluss (HD1) fluidkommunizierend verbinden und im zweiten Schaltzustand den ersten Auslass (2) und den ersten Schalt-Anschluss (HD1) fluidkommunizierend verbinden und wobei das zweite Verschlusselement (26) radiale (18) und axiale Bohrungen (19) aufweist, welche im zweiten Schaltzustand den Einlass (1) und den zweiten Schalt-Anschluss (HD2) fluidkommunizierend verbinden und im ersten Schaltzustand den zweiten Auslass (3) und den zweiten Schalt-Anschluss (HD2) fluidkommunizierend verbinden.

Längenverstellbare Pleuelstange (7), wobei zwischen den Ankern (15a, 15b) und der Aufnahme (20) wenigstens ein Hohlraum (27), insbesondere wenigstens eine Axialnut, gebildet wird, welche vorzugsweise in den Ankern (15a, 15b) ausgebildet ist.

Längenverstellbare Pleuelstange (7), wobei im ersten Schaltzustand zwischen dem ersten Verschlusselement (25) und dem ersten Anker (15a) ein erster Spalt (28) gebildet wird, welcher den Einlass (1) mit den radialen (18) und axialen Bohrungen (19) des ersten Verschlusselements, insbesondere über den Hohlraum (27), fluidkommunizierend verbindet, und wobei im zweiten Schaltzustand zwischen dem zweiten Verschlusselement (26) und dem zweiten Anker (15b) ein zweiter Spalt (29) gebildet wird, welcher den Einlass (1) mit den radialen (18) und axialen Bohrungen (19) des ersten Verschlusselements (25), insbesondere über den Hohlraum (27), fluidkommunizierend verbindet.

Längenverstellbare Pleuelstange (7), wobei das erste Verschlusselement (25) und das zweite Verschlusselement (26) Nuten (30), insbesondere Umlaufnuten, aufweisen, eingerichtet, um jeweils mehrere radiale Bohrungen (18) fluidkommunizierend miteinander zu verbinden.

Längenverstellbare Pleuelstange (7), wobei das Ankerelement (15; 15a 15b) von den Verschlusselementen (25, 26) und/oder von der Aufnahme (20) geführt werden.

Längenverstellbare Pleuelstange (7), welche ein erstes Deckelelement (31) aufweist, welches die axialen Bohrungen (18) des ersten Verschlusselements (25) im ersten Schaltzustand zu der Außenseite des Schaltventils (9) hin verschließt, und ein zweites Deckelelement (32) aufweist, welches die axialen Bohrungen (18) des zweiten Verschlusselements (26) im zweiten Schaltzustand zu der Außenseite des Schaltventils (9) hin verschließt.

Längenverstellbare Pleuelstange (7), wobei die Aufnahme (20) in dem Bereich, in welchem der Einlass (1) angeordnet ist, welcher insbesondere in zwei Einlassleitungen geteilt ist, wenigstens eine Umlaufnut (33) aufweist, eingerichtet, um den ersten Spalt (28) zwischen dem ersten Verschlusselement (25) und dem erstem Anker (15a) und/oder den zweiten Spalt (29) zwischen zweitem Verschlusselement (26) und zweitem Anker (15b) fluidkommunizierend mit dem Einlass 1 zu verbinden.

Längenverstellbare Pleuelstange (7), wobei zwischen dem ersten Anker (15a) und dem ersten Verschlusselement (25) ein erster Durchlass (38), insbesondere eine Öffnung, angeordnet ist, welcher den ersten Spalt (28) mit dem ersten Schalt-Anschuss (HD1) verbindet, und wobei zwischen dem zweiten Anker (15b) und dem zweiten Verschlusselement (26) ein zweiter Durchlass (39), insbesondere eine Öffnung, angeordnet ist, welcher den zweiten Spalt (29) mit dem zweiten Schalt-Anschluss (HD2) verbindet.

Bei den exemplarisch erläuterten Ausführungsbeispielen handelt es sich lediglich um Beispiele, die den Schutzbereich, die Anwendungen und den Aufbau der Erfindung in keiner Weise einschränken sollen. Vielmehr wird dem Fachmann durch die vorausgehende Beschreibung ein Leitfaden für die Umsetzung von mindestens einem exemplarischen Ausführungsbeispiel gegeben, wobei Änderungen, insbesondere Kombinationen von einzelnen Merkmalen verschiedener Ausführungsbeispiele, im Hinblick auf die Funktion und Anordnung der beschriebenen Bestandteile vorgenommen werden können, ohne den offenbarten Schutzbereich zu verlassen.

### Bezugszeichenliste

- 1: Einlass
- 2: Erster Auslass
- 3: Zweiter Auslass
- HD1: Erster Schalt-Anschluss
- HD2: Zweiter Schalt-Anschluss
- L: Pleuellänge
- 7: Pleuelstange
- 8: Hydraulikeinrichtung
- 9: Schaltventil
- 10: Hydraulikmedium-Zuleitung
- 11: Drainage-Leitung
- 12: Schließventil
- 13: Erste Spule
- 14: Zweite Spule
- 15: Ankerelement
- 15a: Erster Anker
- 15b: Zweiter Anker
- 16: Radiale Zuleitungsbohrung
- 17: Axiale Zuleitungsbohrung
- 18a, 18b: Radiale Drainagebohrung
- 19a, 19b: Axiale Drainagebohrung
- 20: Aufnahme
- 21: Erste Rückstelleinrichtung
- 22: Zweite Rückstelleinrichtung
- 23: Deckelelement
- 24: Mittelteil der Aufnahme
- 25: Erstes Verschlusselement
- 26: Zweites Verschlusselement
- 27: Hohlraum
- 28: Erster Spalt
- 29: Zweiter Spalt
- 30: Nut eines Verschlusselements
- 31: Erstes Deckelement
- 32: Zweites Deckelement
- 33: Erste Umlaufnut der Aufnahme
- 34: Zweite Umlaufnut der Aufnahme
- 35: Erste Umlaufnut eines Ankerelements
- 36: Zweite Umlaufnut des Ankerelements
- 37: Sicherungselement
- 38: Erster Durchlass
- 39: Zweiter Durchlass
- 40: Hülse
- 41: Umlaufnut der Hülse
- 42: Zuleitungskanal der Hülse
- 43: Drainagekanal der Hülse
- 44: Einlasskanal der Hülse
- 45: Federteller

## Patentansprüche

1. Längenverstellbare Pleuelstange (7) für eine Hubkolbenmaschine, insbesondere für eine Hubkolbenbrennkraftmaschine, aufweisend:
- eine Hydraulikeinrichtung (8), mit welcher eine Länge der Pleuelstange einstellbar ist, und
- ein Schaltventil (9) zur Steuerung von Zu- und Abfluss eines Hydraulikmediums in die oder aus der Hydraulikeinrichtung (8),
wobei das Schaltventil (9) elektromagnetisch betätigbar ist.

2. Längenverstellbare Pleuelstange (7) nach Anspruch 1, wobei das Schaltventil (9) eine neutrale Schaltstellung aufweist, in welcher Zu- und Abfluss in die/aus der Hydraulikeinrichtung (8) verhindert wird und vorzugsweise das Schaltventil (9) nicht elektromagnetisch betätigt wird, insbesondere keine elektromagnetische Induktion stattfindet.

3. Längenverstellbare Pleuelstange (7) nach einem der vorhergehenden Ansprüche, wobei das Schaltventil (9) aufweist:
- eine erste Spule (13); und
- ein Ankerelement (15), welches ein ferromagnetisches oder magnetisierbares Material aufweist und zwischen genau zwei Schaltstellungen verschiebbar ist.

4. Längenverstellbare Pleuelstange (7) nach Anspruch 3, wobei das Ankerelement (15) und die erste Spulen (13) in einer gemeinsamen Aufnahme (20) gelagert werden, und
wobei das Ankerelement (15) durch eine einzige erste Rückstelleinrichtung (21), insbesondere ein Federelement, welche mit der Aufnahme (20), insbesondere mit Deckelelementen (23) der Aufnahme (20), zusammenwirkt, in einer definierten Position, vorzugsweise einer ersten Schaltstellung gehalten wird.

5. Längenverstellbare Pleuelstange (7) nach Anspruch 3, wobei das Schaltventil (9) des Weiteren aufweist:
- eine zweite Spule (14), welche von der ersten Spule (13) beabstandet ist, und
wobei das Ankerelement (15) zwischen wenigstens zwei, insbesondere drei, Schaltstellungen verschiebbar ist.

6. Längenverstellbare Pleuelstange (7) nach Anspruch 5, wobei das Ankerelement (15) und die Spulen (13, 14) in einer gemeinsamen Aufnahme (20) gelagert werden, und wobei das Ankerelement (15) durch zwei Rückstelleinrichtungen (21, 22), insbesondere Federelementen, welche mit der Aufnahme (20), insbesondere mit Deckelelementen (23) der Aufnahme (20), zusammenwirken, in einer definierten Position, vorzugsweise einer neutralen Schaltstellung gehalten wird.

7. Längenverstellbare Pleuelstange (7) nach einem der Ansprüche 3 bis 6, wobei das Ankerelement (15) wenigstens eine radiale Zuleitungsbohrung (16) und wenigstens eine axiale Zuleitungsbohrung (17) aufweist, welche fluidkommunizierend verbunden sind und eingerichtet sind, um den Einlass (1) mit dem ersten Schaltanschluss (HD1) oder mit dem zweiten Schaltanschluss (HD2) fluidkommunizierend zu verbinden.

8. Längenverstellbare Pleuelstange (7) nach einem der Ansprüche 3 bis 7, wobei das Ankerelement (15) wenigstens eine radiale Drainagebohrung (18) und wenigstens eine axiale Drainagebohrung (19) aufweist, welche fluidkommunizierend verbunden sind eingerichtet sind, um den ersten Schaltanschluss (HD1) mit dem ersten Auslass (2) und den zweiten Schaltanschluss (HD2) mit dem zweiten Auslass (3) fluidkommunizierend zu verbinden.

9. Längenverstellbare Pleuelstange (7) nach einem der Ansprüche 3 bis 8, wobei das Ankerelement zwei axiale Drainagebohrungen (19a, 19b) aufweist, und wobei radiale Drainagebohrungen (18) entweder mit einer ersten axialen Drainagebohrung (19a) oder mit einer zweiten axialen Drainagebohrung (19b) verbunden sind, wobei die radialen Drainagebohrungen (18), welche mit unterschiedlichen axialen Drainagebohrungen (19) verbunden sind, axial in Bezug auf eine Achse des Ankerelements (15) jeweils in einer anderen Ebene liegen.

10. Längenverstellbare Pleuelstange (7) nach Anspruch 8 oder 9, wobei wenigstens eine radiale Drainagebohrung (18), welche mit der zweiten axialen Drainagebohrung (19b) verbunden ist, im ersten Schaltzustand den zweiten Schalt-Anschluss (HD2) mit dem zweiten Auslass (3) verbindet, und wobei wenigstens eine radiale Drainagebohrung (18), welche mit der ersten axialen Drainagebohrung (19a) verbunden ist, im zweiten Schaltzustand den ersten Schalt-Anschluss (HD1) mit dem ersten Auslass (2) verbindet.

11. Längenverstellbare Pleuelstange (7) nach einem der Ansprüche 7 bis 10, wobei das Ankerelement (15) eine erste Umlaufnut (35) aufweist, welche die radialen Zuleitungsbohrungen (16) fluidkommunizierend miteinander verbindet.

12. Längenverstellbare Pleuelstange (7) nach einem der Ansprüche 3 bis 10, wobei das Ankerelement (15) eine erste Umlaufnut (35) aufweist, welche eingerichtet ist, um den Einlass (1) in einem ersten Schaltzustand mit dem ersten Schaltanschluss (HD1) und in einem zweiten Schaltzustand mit dem zweiten Schaltanschluss (HD2) fluidkommunizierend zu verbinden.

13. Längenverstellbare Pleuelstange (7) nach einem der Ansprüche 3 bis 12, wobei das Ankerelement einen ersten Anker (15a) und einen zweiten Anker (15b) aufweist, welche jeweils von einem Rückstelleinrichtung (21, 22) an einem Mittelteil (24) der Aufnahme (20) abgestützt werden.

14. Hubkolbenmaschine, insbesondere Hubkolbenbrennkraftmaschine, welche eine längenverstellbare Pleuelstange (7) nach einem der Ansprüche 1 bis 13 aufweist

15. Fahrzeug mit einer Hubkolbenmaschine, insbesondere einer Hubkolbenbrennkraftmaschine, welche eine längenverstellbare Pleuelstange (7) nach einem der Ansprüche 1 bis 13 aufweist.

## Claims

1. A length-adjustable piston rod (7) for a reciprocating piston engine, in particular for a reciprocating piston internal combustion engine, comprising:
- a hydraulic device (8) by means of which a length of the piston rod can be adjusted, and
- a switching valve (9) for controlling the inflow and the outflow of a hydraulic medium into, or out of, the hydraulic device (8),
wherein the switching valve (9) can be actuated electromagnetically.

2. The length-adjustable piston rod (7) according to claim 1, wherein the switching valve (9) has a neutral switching position in which the inflow and the outflow into / out of the hydraulic device (8) is prevented and in which preferably the switching valve (9) is not actuated electromagnetically, in particular in which no electromagnetic induction takes place.

3. The length-adjustable piston rod (7) according to any one of the preceding claims, wherein the switching valve (9) comprises:
- a first coil (13); and
- an armature element (15) which comprises a ferromagnetic or a magnetizable material and which can be displaced between exactly two switching positions.

4. The length-adjustable piston rod (7) according to claim 3, wherein the armature element (15) and the first coils (13) are supported in a common receptacle (20), and
wherein the armature element (15) is held in a defined position, preferably in a first switching position, by a single first resetting device (21), in particular a spring element, which interacts with the receptacle (20), in particular with cover elements (23) of the receptacle (20).

5. The length-adjustable piston rod (7) according to claim 3, wherein the switching valve (9) further comprises:
- a second coil (14) which is spaced from the first coil (13), and wherein the armature element (15) is displaceable between at least two switching positions, in particular three switching positions.

6. The length-adjustable piston rod (7) according to claim 5, wherein the armature element (15) and the coils (13, 14) are supported in a common receptacle (20), and wherein the armature element (15) is held in a defined position, preferably in a neutral switching position, by two resetting devices (21, 22), in particular spring elements, which interact with the receptacle (20), in particular with cover elements (23) of the receptacle (20).

7. The length-adjustable piston rod (7) according to any one of the claims 3 to 6,
wherein the armature element (15) comprises at least one radial supply line bore (16) and at least one axial supply line bore (17) which are connected in a fluid-communicating manner and which are adapted to connect the inlet (1) to the first switching connection (HD1) or to the second switching connection (HD2) in a fluid-communicating manner.

8. The length-adjustable piston rod (7) according to any one of the claims 3 to 7, wherein the armature element (15) has at least one radial drainage line bore (18) and at least one axial drainage line bore (19), which are connected in a fluid-communicating manner and which are adapted to connect the first switching connection (HD1) to the first outlet (2) and the second switching connection (HD2) to the second outlet (3) in a fluid-communicating manner.

9. The length-adjustable piston rod (7) according to any one of the claims 3 to 8, wherein the armature element has two axial drainage line bores (19a, 19b), and wherein radial drainage line bores (18) are connected either to a first axial drainage line bore (19a) or to a second axial drainage line bore (19b), wherein the radial drainage line bores (18) which are connected to different axial drainage line bores (19) are each axially located in a different plane with respect to an axis of the armature member (15).

10. The length-adjustable piston rod (7) according to claim 8 or 9, wherein, in the first switching state, at least one radial drainage line bore (18), which is connected to the second axial drainage line bore (19b), connects the second switching connection (HD2) to the second outlet (3), and wherein, in the second switching state, at least one radial drainage line bore (18), which is connected to the first axial drainage line bore (19a), connects the first switching connection (HD1) to the first outlet (2).

11. The length-adjustable piston rod (7) according to any one of the claims 7 to 10, wherein the armature element (15) comprises a first circumferential groove (35) which connects the radial supply line bores (16) to one another in a fluid-communicating manner.

12. The length-adjustable piston rod (7) according to any one of the claims 3 to 10, wherein the armature element (15) comprises a first circumferential groove (35) which, in a first switching state, is arranged to connect the inlet (1) to the first switching connection (HD1) in a fluid-communicating manner and which, in a second switching state, is arranged to connect the inlet (1) to the second switching connection (HD2) in a fluid-communicating manner.

13. The length-adjustable piston rod (7) according to any one of the claims 3 to 12, wherein the armature element comprises a first armature (15a) and a second armature (15b), each of which are supported by a resetting device (21, 22) on a central portion (24) of the receptacle (20).

14. A reciprocating piston engine, in particular a reciprocating piston internal combustion engine, which comprises a length-adjustable piston rod (7) according to any one of the claims 1 to 13.

15. A vehicle with a reciprocating piston engine, in particular with a reciprocating piston internal combustion engine, which comprises a length-adjustable piston rod (7) according to any one of the claims 1 to 13.

## Revendications

1. Bielle (7) ajustable en longueur pour un moteur à pistons alternatifs, en particulier pour un moteur à combustion interne à pistons alternatifs, présentant :
- un dispositif hydraulique (8), avec lequel une longueur de la bielle peut être réglée, et
- une soupape de commutation (9) servant à commander un flux entrant et un flux sortant d'un milieu hydraulique dans le dispositif hydraulique (8) ou hors de celui-ci,
dans laquelle la soupape de commutation (9) peut être actionnée de manière électromagnétique.

2. Bielle (7) ajustable en longueur selon la revendication 1, dans laquelle la soupape de commutation (9) présente une position de commutation neutre, dans laquelle un flux entrant et un flux sortant dans le dispositif hydraulique (8)/hors de celui-ci sont empêchés et de préférence la soupape de commutation (9) n'est pas actionnée de manière électromagnétique, particulier aucune induction électromagnétique n'a lieu.

3. Bielle (7) ajustable en longueur selon l'une quelconque des revendications précédentes, dans laquelle la soupape de commutation (9) présente :
- une première bobine (13) ; et
- un élément d'ancrage (15), lequel présente un matériau ferromagnétique ou magnétisable et peut être coulissé entre précisément deux positions de commutation.

4. Bielle (7) ajustable en longueur selon la revendication 3, dans laquelle l'élément d'ancrage (15) et la première bobine (13) sont montés dans un logement (20) commun, et
dans laquelle l'élément d'ancrage (15) est maintenu dans une position définie, de préférence dans une première position de commutation, par un unique premier dispositif de rappel (21), en particulier un élément formant ressort, lequel coopère avec le logement (20), en particulier avec des éléments de couvercle (23) du logement (20).

5. Bielle (7) ajustable en longueur selon la revendication 3, dans laquelle la soupape de commutation (9) présente par ailleurs :
- une deuxième bobine (14), laquelle est tenue à distance de la première bobine (13), et
dans laquelle l'élément d'ancrage (15) peut être coulissé entre au moins deux, en particulier trois, positions de commutation.

6. Bielle (7) ajustable en longueur selon la revendication 5, dans laquelle l'élément d'ancrage (15) et les bobines (13, 14) sont montés dans un logement (20) commun, et dans laquelle l'élément d'ancrage (15) est maintenu dans une position définie, de préférence une position de commutation neutre, par deux dispositifs de rappel (21, 22), en particulier des éléments formant ressorts, lesquels coopèrent avec le logement (20), en particulier avec des éléments de couvercle (23) du logement (20).

7. Bielle (7) ajustable en longueur selon l'une quelconque des revendications 3 à 6, dans laquelle l'élément d'ancrage (15) présente au moins un alésage d'alimentation radial (16) et au moins un alésage d'alimentation axial (17), lesquels sont reliés en communication fluidique et sont mis au point pour relier en communication fluidique l'entrée (1) à la première borne de commutation (HD1) ou à la deuxième borne de commutation (HD2).

8. Bielle (7) ajustable en longueur selon l'une quelconque des revendications 3 à 7, dans laquelle l'élément d'ancrage (15) présente au moins un alésage de drainage radial (18) et au moins un alésage de drainage axial (19), lesquels sont reliés en communication fluidique et sont mis au point pour relier en communication fluidique la première borne de commutation (HD1) à la première sortie (2) et la deuxième borne de commutation (HD2) à la deuxième sortie (3).

9. Bielle (7) ajustable en longueur selon l'une quelconque des revendications 3 à 8, dans laquelle l'élément d'ancrage présente deux alésages de drainage axiaux (19a, 19b), et dans laquelle des alésages de drainage radiaux (18) sont reliés soit à un premier alésage de drainage axial (19a) soit à un deuxième alésage de drainage axial (19b), dans laquelle les alésages de drainage radiaux (18), lesquels sont reliés à des alésages de drainage axiaux (19) différents, se situent de manière axiale par rapport à un axe de l'élément d'ancrage (15) respectivement dans un autre plan.

10. Bielle (7) ajustable en longueur selon la revendication 8 ou 9, dans laquelle au moins un alésage de drainage radial (18), lequel est relié au deuxième alésage de drainage axial (19b), relie dans le premier état de commutation la deuxième borne de commutation (HD2) à la deuxième sortie (3), et dans laquelle au moins un alésage de drainage radial (18), lequel est relié au premier alésage de drainage axial (19a), relie dans le deuxième état de commutation la première borne de commutation (HD1) à la première sortie (2).

11. Bielle (7) ajustable en longueur selon l'une quelconque des revendications 7 à 10, dans laquelle l'élément d'ancrage (15) présente une première rainure périphérique (35), laquelle relie entre eux en communication fluidique les alésages d'alimentation radiaux (16).

12. Bielle (7) ajustable en longueur selon l'une quelconque des revendications 3 à 10, dans laquelle l'élément d'ancrage (15) présente une première rainure périphérique (35), laquelle est mise au point pour relier en communication fluidique l'entrée (1) dans un premier état de commutation à la première borne de commutation (HD1) et dans un deuxième état de commutation à la deuxième borne de commutation (HD2).

13. Bielle (7) ajustable en longueur selon l'une quelconque des revendications 3 à 12, dans laquelle l'élément d'ancrage présente un premier ancrage (15a) et un deuxième ancrage (15b), lesquels sont soutenus respectivement par un dispositif de rappel (21, 22) au niveau d'une partie centrale (24) du logement (20).

14. Moteur à pistons alternatifs, en particulier moteur à combustion interne à pistons alternatifs, lequel présente une bielle (7) ajustable en longueur selon l'une quelconque des revendications 1 à 13.

15. Véhicule avec un moteur à pistons alternatifs, en particulier un moteur à combustion interne à pistons alternatifs, lequel présente une bielle (7) ajustable en longueur selon l'une quelconque des revendications 1 à 13.
